# EUROPEAN PATENT APPLICATION

(11) **EP 4 261 240 A1**
(43) Date of publication of application: **18.10.2023**
(21) Application number: 22168216.4
(22) Date of filing: 13.04.2022
(51) Int. Cl.: C08G 18/62, C09D 5/03, C09D 175/06

(54) **SELF-STRATIFYING MULTI-COMPONENT THERMOSETTING COATING POWDER COMPOSITION**

(71) Applicant: TIGER Coatings GmbH & Co. KG, 4600 Wels (AT)
(72) Inventor: POLLMANN, Nora, 4600 Wels (AT); TAUCHER, Monika, 4600 Wels (AT); ROISER, Lukas, 4600 Wels (AT)
(74) Representative: SONN Patentanwälte OG

(57) **Abstract**

The present invention relates to a self-stratifying multi-component thermosetting coating powder composition, comprising component 1 which comprises a hydroxyl-functional polyester resin (A) and a crosslinker (C1), and component 2 which comprises a hydroxyl-functional acrylic resin (B) and a crosslinker (C2), wherein components 1 and 2 are each present in a multitude of discrete particles, the crosslinkers (C1) and (C2) are selected from the group of isocyanates, and the composition further comprises color pigments. The invention further relates to a process for producing a multi-component thermosetting coating powder composition, to a powder coating obtained by using the coating powder composition, to a substrate being at least partially coated with the powder coating and to the use of the coating powder.

## Description

The present invention relates to the field of coatings, and in particular to self-stratifying thermosetting coating powders and self-stratified powder coatings obtained therefrom which coatings are suitable for architectural and outdoor applications.

Coating powders are coating compositions in powder form that can be applied to a substrate, typically by means of an electrostatic process, such as an electrostatic spraying process. Subsequently, the applied coating powder is treated with energy (such as heat) to form a powder coating onto the substrate. Powder coatings based on thermosetting resins are most widely used in the industry. These typically comprise a resin, a curing agent to crosslink said resin, and optionally further compounds, such as pigments, fillers and additives. Self-crosslinking resins may also be employed, which do not necessarily require an additional curing agent for crosslinking.

Coating powders are used in various applications that require excellent substrate protection, high durability, good weatherability, and/or a decorative optical appearance, resulting in long-term preservation of both functional and aesthetical properties of the obtained powder coatings. Further, as coating powders are typically essentially free of volatile organic compounds (VOCs), such as solvents, coating powders are an environmentally friendly coating solution, as for example compared to solvent-based liquid paints. Coating powders can be coated onto various substrates, such as metal, particularly aluminum, iron and steel, wood, glass, ceramic, polymers and composite materials. The use of coating powders is common in many industries, such as in the automotive industry (e.g. for rim coatings), the architectural industry (e.g. for façade or window/door frame coatings), the heavy industry (e.g. for the coating of machine parts), the furniture industry (for the coating of wood - such as medium density fiberboard (MDF) and solid wood - and metal furniture parts, the agricultural and construction industry (e.g. for the coating of agricultural machinery or excavators), and the household appliances industry.

A powder coating can include multiple layers which can for example be formed by successive application of said layers to tailor the properties of the resulting powder coating. Often, a first coating layer (a so-called primer or bottom layer) is applied which may provide good adhesion to and/or corrosion protection of the substrate and/or mechanical strength and/or barrier properties, followed by a second coating layer (a so-called topcoat or top layer) which may provide durability, weatherability, mechanical resistance and/or the desired optical appearance of the coating. The bottom coating layer may also provide, or at least contribute to, the desired optical appearance of the coating, in particular with respect to color and/or effect. The bottom layer can also be pigmented, which may provide the desired optical appearance, in particular with respect to the color and/or effect. The bottom layer is often followed by the topcoat, which may provide durability, weatherability, mechanical resistance and/or the desired optical appearance of the coating, in particular with respect to gloss, matting and/or texture.

Alternatively, the powder coating can include three layers consisting of primer, basecoat and topcoat, the basecoat being a middle layer in-between the primer and topcoat. However, this approach requires multiple coating compositions and multiple application and curing steps, and thus is both time- and energy-intensive, and consequently cost-intensive. Another known approach to obtain multilayer powder coatings is the application of at least two coating powders followed by a single curing step, also known as a "powder-in-powder" powder coating. Although this approach is more energy-efficient than conventional multi-layer powder coating processes, as it requires only a single curing step (compared to at least two curing steps in conventional processes), the quality of the obtained powder coatings - with regard to both functional and aesthetic properties - is often insufficient for wide industrial applicability. Often, a poorly separated coating layer interface is obtained, both negatively affecting the desired functionality of the primer- and top-coating. Even though the powder-in-powder process requires only a single curing step, still at least two coating powder application steps are necessary, which again is time- and cost intensive. Another approach to form multilayer powder coatings makes use of the concept of self-stratification. When applying a self-stratifying coating powder composition onto a substrate, separate layers with a different composition are formed upon cure. For example, in case of a two-layer powder coating, at least one compound (or even component) is enriched in either the top layer or the bottom layer. As such, self-stratification allows to form a multilayer powder coating by a single application and curing step without the need of repeated coating processes. Of course, instead of two distinct layers (e.g. the bottom layer mostly comprises a given component and the top layer is essentially free of said component), a single layer showing a concentration gradient of at least a given compound (or even component) may be obtained by employing the concept of self-stratification. Further, such self-stratification may allow to form special types of layers, e.g. the formation of islands of one component in the other component. This can lead to a special optical effect.

The concept of self-stratification has been widely discussed in the art. WO 2012/106599 A1 discloses a multi-phase self-stratifying coating system that generates a multi-phase stratified coating upon cure wherein two phases are separated by a diffuse interface such that the stratified coating exhibits a gradient behavior. One phase is rich in a polymeric binder having a telechelic resin with reactive internal groups, reactive end groups and an alkoxide oligomer, and another phase is rich in a polymeric binder having a fluorinated polymer derived from fluorinated vinyl-based monomers.

US 2021/0269665 A1 discloses a self-stratifying coating composition comprising first and second polymer particles, with the volume average particle size diameters of the first and second polymer particles having a ratio from 1:20 to 1:4. The polymer particles can for example be based on acrylic, polyester, polyurethane, silicone or epoxy resins.

CN 104530948 A relates to a fluororesin-polyurethane self-stratified concrete protective coating. Fluorine-modified polyurethane is used as intermediate transition layer to improve the compatibility between fluororesin and polyurethane. In CN 101724326 B, a water-based organic silicon-acrylic self-stratifying paint is disclosed, with an organic silicon-modified acrylic emulsion used as transition layer to improve the self-stratifying performance. CN 107298930 A focuses on an organic silicon-polyurea self-stratifying coating, whilst CN 105885626 A relates to a self-stratifying powder coating composition based on epoxy resin and acrylic resin.

For certain applications, the use of coating powders comprising an acrylic resin and a polyester resin is particularly suitable due to the good durability, weatherability and optical appearance of the obtained powder coating.

In US 9469768 B1, a chemical agent resistance coating (CARC) is disclosed which comprises a urethane-polyester resin, a styrene-free hydroxyl functional acrylic resin and a hardener.

WO 2018/204733 A1 relates to a curable powder coating composition comprising one or more hydroxyl or carboxyl functional polyester(s) (A), one or more hydroxyl or carboxyl functional acrylic resin(s) (B) and one or more crosslinker(s) (C) able to react with (A) and/or (B).

It is an object of the present invention to further improve the weatherability, durability and optical appearance of a powder coating obtained from a thermosetting coating powder comprising a polyester resin and an acrylic resin.

Although coating powder compositions comprising an acrylic resin and a polyester resin are widely used in the industry, their use in self-stratified coatings is yet unknown. It was surprisingly found in the present invention that a multi-component thermosetting coating powder composition comprising an acrylic resin, a polyester resin and color pigments yields a self-stratified powder coating having a bottom layer close to the substrate enriched with polyester resin and color pigments, and a top layer close to the surface enriched with acrylic resin. This does not only result in a good balance between flexibility, strength and stiffness of the resulting powder coating due to the combination of acrylic resin and polyester resin and in a superior durability and weatherability provided by the top layer and good substrate adhesion provided by the bottom layer, but also in excellent color retention due to the color pigments being enriched in the bottom layer, and enhanced gloss and shine retention owing to the preferably transparent or only slightly colored top layer, which may provide for both a glossy or matt optical appearance of the coating.

The present invention is directed to a self-stratifying multi-component thermosetting coating powder composition comprising component 1 which comprises a hydroxyl-functional polyester resin (A) and a crosslinker (C1), and component 2 which comprises a hydroxyl-functional acrylic resin (B) and a crosslinker (C2), wherein components 1 and 2 are each present as a multitude of discrete particles, the crosslinkers (C1) and (C2) being selected from the group of isocyanates, and the composition further comprising color pigments.

The self-stratifying multi-component thermosetting coating powder composition according to the present invention can be crosslinked for example by means of heating, e.g. by means of convection energy, e.g. by means of a convection oven and/or infrared (IR) radiation (e.g. IR oven and/or induction heating). This allows to benefit from the viscosity drop of the compounds present in the composition upon heating, which results in increased mobility of the compounds, hereby assisting in the self-stratification, particularly the formation of separate layers. The resulting powder coating can exhibit distinct layers of polyester and acrylic resin with good interlayer interactions, a smooth, non-corrugated surface and a uniform thickness. Further, the use of thermal crosslinking is advantageous in that a comparably thick coating layer (e.g. with a thickness of 50 to 120 µm) can be evenly crosslinked.

The coating powder composition according to the present invention is capable of undergoing self-stratification after application onto a substrate and subsequent curing to form a powder coating. In order to form a multilayer coating, the hydroxyl-functional polyester resin and the hydroxyl-functional acrylic resin preferably show a certain difference in specific parameters (also referred to as "multilayer parameters"), for example in their affinity parameters or their surface tensions (exemplary multilayer parameters and corresponding measurement methods can e.g. be found in GB 1570540 A).

**[Polyester resin (A)]** The hydroxyl-functional polyester resin (A) according to the present invention comprises hydroxyl groups (OH groups) allowing for a chemical reaction with the isocyanate groups of the crosslinker (C1). Preferably, the hydroxyl-functional polyester resin (A) has a hydroxyl value (HV) from 15 to 350 mg KOH/g, more preferably from 20 to 200 mg KOH/g, even more preferably from 25 to 150 mg KOH/g, yet more preferably from 25 to 100 mg KOH/g. The hydroxyl-functional polyester resin (A) may also have a HV from 25 to 70 mg KOH/g, preferably from 30 to 65 mg KOH/g or from 40 to 100 mg KOH/g, preferably from 70 to 100 mg KOH/g. This allows for the resulting crosslink density to balance well the physical properties of the resulting powder coating, particularly its mechanical properties (such as flexibility, strength and stiffness). The hydroxyl groups can be present as terminal groups of the polyester chain and/or in side chains, depending on which monomers were used in the synthesis of the polyester.

Instead of using one hydroxyl-functional polyester resin (A) in component 1, a mixture (i.e., blend) of at least two hydroxyl-functional polyester resins (A) can also be used in the present invention. For example, hydroxyl-functional polyester resins (A) with differences in their molecular weight, molecular weight distribution, intermolecular structure (amorphous vs. semi-crystalline), hydroxyl value, glass transition temperature, melt viscosity, and/or composition (e.g. employed monomers, type and/or arrangement of structural units of main chains and/or side chains) can be mixed. This can be beneficial to tailor certain thermal, mechanical or chemical properties of the resulting coating powder and powder coating, such as the glass transition temperature (Tg), the flexibility, or the hydroxyl value (e.g. to adjust the crosslink density). In a specific embodiment, hydroxyl-functional polyester resin (A) comprises a mixture of at least two hydroxyl-functional polyester resins; preferably, at least one hydroxyl-functional amorphous polyester resin and at least one hydroxyl-functional semi-crystalline polyester resin, or, alternatively, at least two different hydroxyl-functional amorphous polyester resins are employed in such embodiments. The hydroxyl-functional polyester resin (A) according to the present invention can also be used in a mixture with a polyester bearing functional groups and/or non-functional groups, such as alkyl, alkene, carboxyl, epoxy, hydroxyl, amide or amine groups, or a combination thereof. A non-functional group in this context is understood as a chemical group that does not undergo a curing reaction with crosslinkers of the composition, e.g. isocyanate-based crosslinkers, under typical curing conditions (e.g. 10 min at 200 °C); e.g. an alkyl or aryl group. In certain embodiments, a polyester resin bearing only non-functional groups is used in such a mixture, as this polyester resin will be present in the powder coating according to the present invention in non-crosslinked state, hereby providing enhanced mechanical flexibility by means of physical crosslinks (e.g. entanglements). The durability of the formed powder coating according to the present invention is not significantly affected in case of a non-crosslinked polyester resins being present in the bottom layer, as it is protected by the top layer, which in turn provides excellent durability. Alternatively, polyester resins bearing functional groups, e.g. carboxyl groups, may be crosslinked with a curing agent other than an isocyanate that is reactive with the respective groups, thereby resulting in the formation of a second polymeric network. This curing reaction may also require a different source of energy, such as UV radiation or electron beams (EB).

Preferably, the hydroxyl-functionalized polyester resin (A) used in the present invention is saturated and has a saturation degree of at least 90%, preferably at least 95%, particularly preferably at least 99% and most preferably 100%, to provide for a good resistance to aging or, in other words, a good long-time durability. It is noted that in the present application, aromatic moieties (e.g. a benzene ring resulting from the incorporation of isophthalic or terephthalic acid) are considered to be saturated. In contrary, isolated or π-conjugated carbon-carbon double bonds, such as in vinyl, allyl, acrylate and methacrylate units, are considered to be unsaturated.

Further preferably, the hydroxyl-functional polyester resin (A) used in the present invention has a weight average molecular weight (Mw) of below 30,000 g/mol, more preferably below 20,000 g/mol, even more preferably below 16,000 g/mol, yet preferably from 5,000 to 15,000 g/mol, even more preferably from 7,000 to 15,000 g/mol, and most preferably from 10,000 to 13,000 g/mol, to allow for a good processability and chain mobility for self-stratification.

It is further preferred in the present invention that the functional polyester resin (A) is amorphous and has a viscosity in the range from 0.5 to 35 Pas, more preferably in the range from 1 to 15 Pas, even more preferably in the range from 1 to 8 Pas, most preferably in the range from 2.5 to 5 Pas at a temperature of 200 °C (as determined according to method 1b given in the present application). This enables good processing and assists in the self-stratification to yield a powder coating with distinct layers and excellent interlayer interactions.

When using a semi-crystalline polyester resin as hydroxyl-functional polyester resin (A) used in the present invention, its viscosity is preferably below 0.5 Pas, more preferably below 0.4 Pas, even more preferably below 0.3 Pas at a temperature of 130 °C (as determined according to method 1b given in the present application). For example, the viscosity of the semi-crystalline polyester resin (A) may be from 0.05 to 0.5 Pas, preferably from 0.05 to 0.4 Pas and more preferably from 0.1 to 0.3 Pas. This results in a decreased viscosity of the polyester phase upon curing and assists in the self-stratification to yield a powder coating with distinct layers and excellent interlayer interactions.

The inventive thermosetting coating powder composition preferably comprises the hydroxyl-functional polyester resin (A) in an amount of from 10 to 50 wt.-%, more preferably from 13 to 45 wt.-%, particularly preferably from 16 to 40 wt.-%, with respect to the total weight of the coating powder composition. It was found that the use of an amount of hydroxyl-functional polyester resin (A) in the given range yields a powder coating with excellent optical properties and mechanical properties. Further, using the hydroxyl-functional polyester resin (A) within the preferred weight range as specified above allows for an excellent processability during production (such as extrusion, crushing and grinding) of the inventive coating powder composition. In contrary, the use of a hydroxyl-functional polyester resin (A) in a content below the preferred weight range may be insufficient to evoke the effect of self-stratification in the obtained powder coating, as the content may be too little in order to form a continuous bottom layer or may lead to an insufficient opacity in case of a very thin, continuous bottom layer. The resulting powder coating would rather be likely to exhibit a corrugated surface, causing an inferior optical appearance along with an inferior durability and weatherability; also, substrate adhesion may be negatively affected. Contrary, an increase of the content of hydroxyl-functional polyester resin (A) to values above the preferred weight range may result in poor self-stratification. This may lead to a non-continuous top layer and thus to an undesired pigment migration to the hydroxyl-functional acrylic resin top layer, thus resulting in an undesirable optical appearance and inferior weatherability.

The hydroxyl-functional polyester resin (A) according to the present invention can be based on the polycondensation reaction of aliphatic, cycloaliphatic and/or aromatic di-, tri- or polyfunctional alcohols with aliphatic, cycloaliphatic and/or aromatic di-, tri- or polyfunctional acids or anhydrides, esters or acid chlorides based on these acids. Preferably, the hydroxyl-functional polyester resin (A) is mainly (at least 80 wt.-%, preferably at least 90 wt.-%, with respect to the total weight of the employed monomers) based on diols and diacids (including their respective anhydrides and halo-acids) to allow for the formation of mostly linear polyester chains without a too high amount of branches. Such polyester resins (A) typically have a functionality of about two to four. However, to increase the functionality of the hydroxyl-functional polyester resin (A), and thus the resulting crosslink density, a small amount of tri- and/or tetrafunctional alcohols, and/or of tri- and/or tetrafunctional acids can be added. Also, a small amount of alcohols and acids with a functionality of greater than four may be employed. Such polyester resins (A) typically have a functionality of greater than two, particularly from 2.1 to 6, preferably from 2.1 to 5 and even more preferably from 2.1 to 4.

The hydroxyl-functional polyester resin (A) according to the present invention can either be amorphous or semi-crystalline, an amorphous hydroxyl-functional polyester resin (A) being preferably used. A person skilled in the art will readily know which monomers in which proportions to select in order to synthesize a polyester resin with a specific functionality and specific, tailored physical properties. In case of a semi-crystalline hydroxyl-functional polyester resin (A), preferably, most of the monomers (or more preferably, all monomers) employed to synthesize said hydroxyl-functional polyester resin (A) are aliphatic and/or cycloaliphatic. The amount of aliphatic and/or cycloaliphatic monomers employed to synthesize the semi-crystalline hydroxyl-functional polyester resin (A) preferably ranges from 50 to 100 wt.-%, more preferably from 70 to 100 wt.-%, even more preferably from 90 to 100 wt.-% and most preferably from 95 to 100 wt.-%, with respect to the total weight of the employed monomers. It is particularly preferred if all monomers employed to synthesize the semi-crystalline hydroxyl-functional polyester resin (A) are aliphatic and/or cycloaliphatic monomers. It is further preferred that at least 70 wt.-%, preferably at least 85 wt.-%, even more preferably at least 95 wt.-% and most preferably 100 wt.-% of the employed monomers to synthesize the semi-crystalline hydroxyl-functional polyester resin (A) are unbranched monomers, such as unbranched diols and/or diacids. By doing so, a polyester resin with a certain degree of crystallinity may be obtained. The use of a semi-crystalline polyester resin enables a quick reduction of the viscosity of the coating powder composition prior to the initiation of the crosslinking reaction upon heating, which prolongs the time available for the formation of layers with good interlayer interactions before the crosslink density and thus the viscosity begins to increase, which consequently leads to a reduction of mobility. Typically, a semi-crystalline polyester resin (A) is used as a blend with at least one amorphous polyester resin (A).

The monomers used to synthesize amorphous hydroxyl-functional polyester resins (A) according to the present invention preferably comprise two or more of mono ethylene glycol, 1,2-propanediol, 1,3-propanediol, 2-methyl-1,3-propanediol, neopentyl glycol, 1,4-butanediol, 1,5-pentanediol, 1,6-hexanediol, 1,4-cyclohexanedimethanol, glycerin, trimethylolethane, trimethylolpropane, pentaerythritol, benzoic acid, succinic acid, glutaric acid, adipic acid, sebacic acid, azelaic acid, 1,4-cyclohexanedicarboxylic acid, terephthalic acid, isophthalic acid, phthalic anhydride, trimellitic acid, trimellitic anhydride. It is clear to the skilled person that at least one acid (or acid-derivative) functional monomer and at least one hydroxyl functional monomer are required. Particularly preferred monomers are 1,3-propanediol, 2-methyl-1,3-propanediol, neopentyl glycol, 1,4-cyclohexanedimethanol, glycerin, trimethylolpropane, adipic acid, 1,4-cyclohexanedicarboxylic acid, terephthalic acid, isophthalic acid, trimellitic anhydride; especially preferred monomers are 2-methyl-1,3-propanediol, neopentyl glycol, glycerin, trimethylolpropane, adipic acid, terephthalic acid, isophthalic acid. This yields amorphous hydroxyl-functional polyester resins (A) with good processability and weatherability, and provides a good balance between flexibility and stiffness of the resulting powder coating according to the present invention.

The monomers used to synthesize semi-crystalline hydroxyl-functional polyester resins (A) according to the present invention preferably comprise two or more of mono ethylene glycol, 1,2-propanediol, 1,3-propanediol, 2-methyl-1,3-propanediol, neopentyl glycol, 1,4-butanediol, 1,5-pentanediol, 1,6-hexanediol, 1,4-cyclohexanedimethanol, succinic acid, glutaric acid, adipic acid, sebacic acid, azelaic acid, dodecanedioic acid, 1,4-cyclohexanedicarboxylic acid, terephthalic acid, isophthalic acid, phthalic anhydride. Particularly preferred monomers are mono ethylene glycol, 1,2-propanediol, 1,3-propanediol, 1,4-butanediol, 1,5-pentanediol, 1,6-hexanediol, 1,4-cyclohexanedimethanol, succinic acid, glutaric acid, adipic acid, sebacic acid, azelaic acid, dodecanedioic acid, 1,4-cyclohexanedicarboxylic acid, terephthalic acid, isophthalic acid; especially preferred monomers are mono ethylene glycol, 1,3-propanediol, 1,4-butanediol, 1,5-pentanediol, 1,6-hexanediol, succinic acid, glutaric acid, adipic acid, sebacic acid, azelaic acid, dodecanedioic acid. This yields semi-crystalline hydroxyl functional polyester resins a (A) with a high degree of crystallinity and provides a rapid viscosity drop of the polyester phase upon curing, thus assisting in the self-stratification of the coating.

If an amorphous hydroxyl-functional polyester resin (A) is used in the present invention, its Tg is preferably in the range from 35 to 80 °C, more preferably from 40 to 70 °C, particularly preferably from 40 to 60 °C. The given upper limit of the Tg ensures that the amorphous hydroxyl-functional polyester resin (A) is present in entropy-elastic state during the crosslinking reaction, provided that the thermal crosslinking is performed at elevated temperature. This enhances the mobility of the polymer chains and facilitates the formation of a powder coating according to the present invention with the desired properties. The given lower limit of the Tg in turn improves the storage and transport stability of the inventive coating powder composition and also facilitates the production of the coating powders. Commercially available, amorphous, hydroxyl-functional polyester resins (A) suitable for use in the present invention are for example Uralac P 1550, Uralac P 1680, Uralac P 1580, Uralac 1675, Uralac 1475, Uralac 1420, Uralac 5504, Uralac 1425, Uralac 1625 (all Covestro, Germany), and Crylcoat 4890-0, Crylcoat 2814-0, Crylcoat 2818-0, Crylcoat 4823-0, Crylcoat 2920-0, Crylcoat 2890-0, Crylcoat 2857-5, Crylcoat 2860-0 (all Allnex, Austria), which can be used alone or in combination. These polyester resins show a good processability and weatherability and assist well in the formation of layers with excellent interfacial interactions, allowing to prepare a powder coating with smooth, non-corrugated surface and interlayer interface, and a uniform optical appearance.

If a semi-crystalline hydroxyl-functional polyester resin (A) is used in the present invention, the maximum of its melting peak (i.e., the Tm) is preferably in the range from 80 to 135 °C, particularly preferably in the range from 90 to 125 °C (determined by means of DSC according to the method given in the present application). Further preferably, the inventive coating powder composition is thermally crosslinked at a temperature above the melting range of the crystalline domains of the semi-crystalline hydroxyl-functional polyester resin (A), or at least above the Tm. The selection of a semi-crystalline hydroxyl-functional polyester resin (A) with a Tm in said preferred range ensures that the crystalline domains are present in molten state upon heating to the crosslinking temperature and at least in the beginning of the crosslinking reaction. Thus, a rapid decrease of the viscosity can be obtained upon heating of the coating powder composition as the crystalline domains melt, and a self-stratified powder coating according to the present invention can be produced. Commercially available semi-crystalline hydroxyl-functional polyester resins (A) suitable for use in the present invention are for example Additol E 04707, Additol E 04654, Additol E 0469 and Additol E 04763 (all Allnex, Austria), which can be employed alone or in combination. These polyesters show a good processability and assist well in the formation of layers with excellent interfacial interactions, allowing to prepare a powder coating with smooth, non-corrugated surface and interlayer interface, and a uniform optical appearance.

**[Acrylic resin]** The hydroxyl-functional acrylic resin (B) according to the present invention comprises hydroxyl groups (OH groups) allowing for a chemical reaction with the isocyanate groups of the crosslinker (C2). Preferably, the hydroxyl-functional acrylic resin (B) has a hydroxyl value (HV) in the range from 15 to 350 mg KOH/g, more preferably from 15 to 200 mg KOH/g, even more preferably from 20 to 150 mg KOH/g, particularly preferably from 25 to 100 mg KOH/g and most preferably from 30 to 90 mg KOH/g. The hydroxyl-functional acrylic resin (B) may also have a hydroxyl value (HV) in the range from 30 to 200 mg KOH/g, in particular from 45 to 150 mg KOH/g and further in particular from 60 to 100 mg KOH/g. This allows for the resulting crosslink density to balance well the physical properties of the resulting powder coating, particularly its mechanical properties (such as strength and stiffness), and ensures a good durability and weatherability.

Instead of using one hydroxyl-functional acrylic resin (B) in component 2, a mixture (i.e., blend) of at least two hydroxyl-functional acrylic resins (B) can also be used in the present invention. For example, hydroxyl-functional acrylic resins (B) with differences in their molecular weight, molecular weight distribution, hydroxyl values, glass transitions temperatures, melt viscosity and/or composition (e.g. type and/or arrangement of structural units) can be mixed. This can be beneficial to tailor certain thermal, mechanical or chemical properties of the resulting coating powder and powder coating, such as the Tg, the hydroxyl value (e.g. to adjust the crosslinking degree), and mechanical properties (e.g. strength, stiffness).

Preferably, the hydroxyl-functional acrylic resin (B) used in the present invention has a saturation degree of at least 90%, preferably at least 95%, particularly preferably at least 99% and most preferably 100%, to provide for a good resistance to aging.

The viscosity of the hydroxyl-functional acrylic resin (B) used in the present invention is preferably in the range from 1 to 20 Pas, more preferably in the range from 1.5 to 17 Pas, at a temperature of 200 °C (as determined according to method 1a given in the present application). This enables a good processing and assists in the self-stratification to yield a powder coating with distinct layers and excellent interlayer interactions.

The inventive thermosetting coating powder composition preferably comprises the hydroxyl-functional acrylic resin (B) in an amount of from 10 to 55 wt.-%, more preferably 15 to 50 wt.-%, particularly preferably 20 to 45 wt.-%, with respect to the total weight of the coating powder composition. It was found that the use of an amount of hydroxyl-functional acrylic resin (B) in the given range in the inventive coating powder composition yields powder coatings with excellent optical properties, weatherability, durability and mechanical properties. A good balance between the formation of distinct layers, the presence of sufficient interlayer interactions, and the desired surface appearance (e.g. uniform color, uniform levelling) can be achieved. Further, using the hydroxyl-functional acrylic resin (B) within the preferred weight range as specified above allows for an excellent processability during production (e.g. extrusion, crushing and grinding) of the inventive coating powder composition. In contrary, the use of a hydroxyl-functional acrylic resin (B) in a content below the preferred weight range may be insufficient to evoke the effect of self-stratification in the obtained powder coating. The resulting powder coating would rather be likely to exhibit a corrugated surface, causing an inferior optical appearance along with an inferior durability and weatherability. Further, the obtainable acrylic resin layer may be too thin, or even non-continuous, resulting in insufficient protection of the underlying polyester resin layer and substrate.

Contrary, an increase of the content of hydroxyl-functional acrylic resin (B) to values above the preferred weight range may result in a powder coating with inferior mechanical properties, such as insufficient flexibility and deteriorated substrate adhesion and in case of pigmented polyester-based bottom layers an insufficient opacity of the coating.

Preferably, an amorphous hydroxyl-functional acrylic resin (B) is used in the present invention, with the Tg preferably being in the range of 35 to 70 °C, more preferably 45 to 65 °C, particularly preferably 50 to 60 °C. The given upper limit of the Tg allows the hydroxyl-functional acrylic resin (B) to be present in entropy-elastic state during the crosslinking reaction, provided that the thermal crosslinking is performed at elevated temperature. This enhances the mobility of the polymer chains and facilitates the formation of a powder coating with the desired properties. The given lower limit in turn improves the storage and transport stability of the inventive coating powder composition and also facilitates the production of the coating powders. Commercially available hydroxyl-functional acrylic resins (B) suitable for use in the present invention are for example AH-1250SF (Sun Polymers, US), Isocryl H-60, Isocryl H-89, Isocryl H-1871, Isocryl H-65, Isocryl H-300 (both Estron Chemical, US) and Almatex HA-2001 (Anderson Development Company, US), which can be employed alone or in combination.

In a preferred embodiment of the present invention, the weight ratio of the hydroxyl-functional acrylic resin (B) to the hydroxyl-functional polyester resin (A) is 3.5 or below, preferably 2.5 or below, particularly preferably 1.0 or below. Especially preferably, the weight ratio of (B)/(A) is in the range of 0.5 to 1.0, particularly preferably 0.7 to 0.95. With this weight ratio of (B)/(A), an excellent balance between stiffness and durability provided by the hydroxyl-functional acrylic resin (B), and flexibility provided by the hydroxyl-functional polyester resin (A) in the resulting powder coating can be achieved.

In another preferred embodiment of the present invention, the hydroxyl values (HV) of the hydroxyl-functional polyester resin (A) and the hydroxyl-functional acrylic resin (B), or, if a mixture of polyester resins (A) and/or a mixture of acrylic resins (B) is present, the average hydroxyl values (HV) of the mixture of polyester resins (A) and/or the mixture of acrylic resins (B), have a difference of 30 mg KOH/g or below, more preferably of 20 mg KOH/g or below, particularly preferably of 15 mg KOH/g or below. This yields a powder coating with distinct layers, a similar crosslink density in each of the respective layers and a good balance between mechanical, chemical and optical properties. Particularly, the resulting powder coating has a good optical appearance, a good balance between flexibility and stiffness, good interlayer interactions and weatherability.

**[Crosslinker]** In the present invention, the crosslinkers (C1) and (C2) comprised in components 1 and 2, respectively, are selected from the group of isocyanates. Each of the crosslinkers (C1) and (C2) can be either one isocyanate or a mixture of at least two isocyanates with different chemical structures.

Monomeric, oligomeric and/or polymeric isocyanates can be employed in the present invention. The use of isocyanates allows for a reaction with the hydroxyl groups of the hydroxyl-functional polyester resin (A) and the hydroxyl-functional acrylic resin (B). Thus, (A) and (B) can both be crosslinked via the same crosslinking mechanism, namely by reaction of hydroxyl groups with isocyanate groups to form urethane groups. This leads to a significant improvement of the interactions between the formed layers of polyester and acrylic resins due to the formation of covalent bonds between polyester resin (A) and acrylic resin (B) in the interlayer region, which enormously improves the mechanical properties of the resulting powder coating, such as the resistance to shearing.

The crosslinkers (C1) and (C2) used in the present invention need to be selected in accordance with the crosslinking conditions, such as time and temperature. Thermal crosslinking is preferably used to crosslink the inventive coating powder composition, in which case the crosslinkers (C1) and (C2) need to be able to initiate the crosslinking reaction at least at the processing temperature and to allow for a quick reaction in a reasonable period of time (e.g. within 5 to 30 min, preferably within 10 to 20 min). As the crosslinkers (C1) and (C2) are present together with the polyester resin (A) and the acrylic resin (B) in components 1 and 2, respectively, they are preferably chosen such that a good storage stability of the inventive coating powder composition at ambient conditions is ensured (e.g. at least 6 to 12 months at 25 °C) without undesired pre-reactions taking place prior to the application of the coating. Further, the crosslinkers (C1) and (C2) are preferably chosen such that any pre-reaction during production of the inventive coating powder composition (e.g. melt-mixing) is completely avoided, or at least to a large extent. For this reason, the crosslinkers (C1) and (C2) preferably have an activation temperature of at least 130 °C, more preferably at least 140 °C, particularly preferably at least 150 °C.

In the present invention, the functionality of the crosslinkers (C1) and (C2) preferably is at least two, which means that at least two isocyanate groups per molecule are present to allow for crosslinking. Preferably, the functionality is greater than two. Preferably, the functionality of the employed isocyanates ranges from 2 to 5, and is particularly preferably from 2.1 to 4.

Preferably, the combined content of crosslinkers (C1) and (C2) in the inventive coating powder composition is in the range of 5 to 50 wt.-%, preferably 10 to 40 wt.-%, and more preferably 15 to 30 wt.-%, with respect to the total weight of the coating powder composition. Along with the respective preferred contents of polyester resin (A) and acrylic resin (B), this yields powder coatings with a crosslink density in such a range that an optimum balance between flexibility and mechanical strength is achieved. The contents of polyester resin (A) and crosslinker (C1), as well as of acrylic resin (B) and crosslinker (C2), are preferably stoichiometrically adjusted to achieve a high crosslink density. This is common knowledge in the art. Also, a slight excess or shortfall of isocyanate groups may be employed. A significant deviation of stoichiometrical ratios, however, could lead to a significant amount of non-crosslinked polyester resin (A), acrylic resin (B), crosslinker (C1) and/or crosslinker (C2) still being present in the obtained powder coating, thus reducing its performance, particularly its mechanical properties and durability. Further, undesired migration of non-crosslinked compounds to the surface of the coating may occur, causing undesired effects such as stains and/or a hazy surface appearance. Further, for certain applications, migration of isocyanates needs to be avoided for regulatory reasons.

In a preferred embodiment of the inventive coating powder composition, the isocyanate is a blocked isocyanate. This is particularly suitable in case of thermal crosslinking. Blocking of the isocyanate group prevents any significant reaction at ambient conditions or upon production of the coating powder composition. To allow for deblocking, the blocked isocyanate needs to be exposed to a certain activation temperature. Only after deblocking can the crosslinking reaction be initiated and proceed, so that the storage, transport and production stability of the inventive coating powder composition below the activation temperature of the blocked isocyanate is significantly improved.

Particularly preferably, the isocyanate used in the present invention is a caprolactam-blocked isocyanate, which preferably deblocks at a temperature in the range of from 160 to 180 °C. This provides for a good shelf life of the inventive coating powder composition, allows for a quick crosslinking reaction after deblocking at the processing temperature, and yields a powder coating with excellent properties, such as an excellent optical appearance, weatherability and physical performance. Exemplary preferred caprolactam-blocked isocyanates are Vestagon B 1530, Vestagon BF 1540 and Vestagon B-1400 (all Evonik, Germany), which can be employed either alone or in combination in the respective components of the inventive coating powder composition.

The chemical structure of the crosslinkers (C1) and (C2) used in the present invention can either be the same or different from each other. The use of a first crosslinker (C1) and a second crosslinker (C2) with different chemical structures allows to tailor the crosslinking rate and the structure of the polymer networks formed in the respective layers. For example, isocyanates with different molecular weights, molecular weight distributions, chemical structures, deblocking groups and/or functionalities can be employed. The use of crosslinkers with different chemical structures further allows to select isocyanates with a good affinity to the polyester resin (A) and the acrylic resin (B), respectively. This in turn allows for example to tailor the network properties in accordance with the desired application and substrate. Further, crosslinkers (C1) and (C2) can be endcapped with different blocking groups having different deblocking temperatures. This allows to use step-wise crosslinking, e.g. to heat to a certain temperature T1, deblock one of the crosslinkers (C1), (C2) at the temperature T1, start crosslinking of one of the polyester resin (A) and acrylic resin (B), heat further to a certain temperature T2 (T1<T2), deblock the other one of the crosslinkers (C1), (C2) at the temperature T2, and start crosslinking of the other one of (A) and (B), so that at temperature T2, both (A) and (B) are crosslinked. Such a step-wise crosslinking can assist in self-stratification and/or improve the interactions between the layers. Additionally, step-wise crosslinking allows to perform the crosslinking reaction more moderately in order to avoid the formation of stress cracks in the powder coating. Of course, instead of blocking agents for blocking (C1) and/or (C2), uretdiones may also be employed.

In a preferred embodiment of the present invention, the crosslinkers (C1) and (C2) have the same chemical structure. This means that when using a blocked isocyanate, also the deblocking group is the same in both crosslinkers (C1) and (C2), or both (C1) and (C2) are uretdiones. By selecting the same crosslinker as crosslinker (C1) and (C2), simultaneous crosslinking of polyester resin (A) and acrylic resin (B) can be ensured, and the same processing parameters, particularly time and temperature, can be applied. Further, during thermal crosslinking to produce a powder coating, there may be some diffusion of crosslinkers (C1) and/or (C2) of one component into the other, so that a small amount of crosslinker (C1) may react with the acrylic resin (B) and a small amount of crosslinker (C2) may react with the polyester resin (A). Thus, by selecting the crosslinkers (C1) and (C2) such that they have the same chemical structure, the homogeneity of the resulting polymer network in the powder coating can be considerably improved, which in turn enhances its performance.

In addition to the crosslinkers (C1) and (C2) according to the present invention, the components 1 and/or 2 can comprise an initiator, accelerator and/or catalyst, for example to speed up the crosslinking reaction at a definite temperature. Preferably, a latent initiator, an accelerator, a catalyst or a mixture thereof is used to avoid a negative impact on the shelf life at ambient conditions (about 25 °C), and to increase the rate of the crosslinking reaction at the processing temperature and/or the resulting crosslink density. Alternatively, components 1 and/or 2 can also comprise further crosslinkers other than isocyanates, which are either capable of reacting with the hydroxyl groups of resins (A) and (B) and/or with other functional groups being present in the composition, such as acid groups. It is noted that the hydroxyl functional polyester resin (A) typically comprises a small amount of free carboxylic acids groups, which crosslinking may also be desirable. Preferably, however, the acid value (AV) of the hydroxyl-functional polyester resin (A) is below 15 mg KOH/g, more preferably below 10 mg KOH/g, yet more preferably below 5 mg KOH/g. Thus, additional crosslinkers for these few free acid groups being present in the composition are not necessary for most applications.

**[Color pigments]** The coating powder composition according to the present invention further comprises color pigments. These color pigments can all be of the same color, or two or more types of color pigments with different colors can be used to tailor the color tone, depending on the desired properties to be achieved (e.g. optical appearance). The color pigments can be selected from organic or inorganic color pigments, or from a mixture thereof. Inorganic color pigments are preferably used due to their excellent color retention, which makes them suitable for long-lasting products. It is noted that white, black and grey are considered as colors herein.

In the present invention, the color pigments can be present in component 1 and/or in component 2, or they can be present as or in separate compound in the coating powder composition. Preferably, the color pigments are embedded in a binder matrix, particularly a resinous matrix, to allow for a safe handling, which is especially important when using color pigments that are known or suspected to have impacts on environment and health. Particularly preferably, however, the color pigments are present in component 1 and/or component 2. The inventive coating powder composition preferably comprises color pigments in an amount from 0.5 to 45 wt.-%, preferably from 1 to 40 wt.-%, more preferably from 5 to 30 wt.-%, with respect to the total weight of the coating powder composition.

It was surprisingly found that in the obtained inventive powder coating, the color pigments are mainly concentrated in the bottom layer (i.e. in the polyester resin layer). The top layer acts as protective layer and thus significantly improves the color retention. It is assumed that the effect of the color pigments being enriched in the bottom layer is due to a higher affinity of the color pigments to the hydroxyl-functional polyester resin (A) than to the hydroxyl-functional acrylic resin (B). In a preferred embodiment of the present invention, the color pigments are comprised in component 1 of the coating powder composition. The color pigments and the hydroxyl-functional polyester resin (A) are then already present in close proximity in the inventive coating powder composition, which enhances said effect and allows for the color pigments to be almost exclusively, or at least to a great extent, present in the bottom layer of the formed powder coating.

In another preferred embodiment of the present invention, component 2 of the coating powder composition comprises less than 1 wt.-%, preferably less than 0.8 wt.-%, more preferably less than 0.5 wt.-%, even more preferably less than 0.3 wt.-% and most preferably less than 0.1 wt.-% of color pigments. The top layer of the resulting powder coating can thus be provided as transparent layer (e.g. clear coat) with an excellent smoothness. This enormously improves the optical appearance of the inventive powder coating. For example, the gloss level and/or shine of the top layer can be adjusted to improve the optical appearance of the colored bottom layer.

In a preferred embodiment of the present invention, component 2 hardens transparently. In this context, "to harden transparently" is understood as follows: A coating powder consisting of component 2 is applied onto a black-colored substrate (e.g. an aluminum panel coated with a black (RAL 9005) powder coating) and cured (such that the layer thickness of the obtained powder coating is 50 µm). Component 2 hardens transparently if the black colored substrate is still visible below the 50 µm powder coating layer of component 2 upon inspection with the human eye.

Suitable, commercially available color pigments that can be employed alone or in combination are Bayferrox 160M, Bayferrox 316, Colortherm Green GN, Sicopal Blue L 6210 or Sicopal Blue L 6310 (all Lanxess, Germany), Black 1G (The Shepherd Color Company, Belgium), Sicotan Yellow L 1010 or Sicotan Yellow 2110 (both BASF, Germany), AL-82431 NEGRO (Al-Farben, Spain), STANDARD PCR 211 Aluminum Powder, STANDARD PCU 5000 Aluminum Powder, STANDARD PCU 3500 Aluminum Powder (all Eckart, Germany).

In a preferred embodiment of the present invention, the color pigments comprise titanium dioxide (TiO₂). Titanium dioxide has a white color, is inorganic, provides a good UV resistance and thus is very suitable for outdoor applications. For this reason, it is one of the most commonly used white pigments in the coating industry. Further, due to its chemical inertness, none of the crosslinking reactions upon production of the inventive powder coating is affected. As already mentioned, it was surprisingly found that during crosslinking, color pigments tend to migrate into the polyester layer of the formed powder coating, so that they are present only, or at least almost exclusively, in the bottom layer of the inventive powder coating. When using titanium dioxide, this brings the further advantage that the photocatalytic effect of titanium dioxide can be avoided, or at least reduced to a significant extent. If titanium dioxide would instead be enriched in the top layer, the photocatalytic effect of titanium dioxide would be likely to cause degradation of the powder coating. However, with a powder coating exhibiting a bottom layer comprising polyester and titanium dioxide, and a top layer comprising acrylic resin, an excellent weatherability and durability are achieved, with the powder coating being producible in a one-step coating process. Suitable commercially available titanium dioxide grades that may be employed, alone or in combination, are Ti-Select TS6200 (DuPont, US), TiPure R-960 and TiPure R-706 (Chemours, US), KRONOS 2360, KRONOS 2160 and KRONOS 2310 (all Kronos, The Netherlands), Tipaque PFC 105 (Ishihara Corporation, US), D-970 and D-918 (Sakai Chemical Industry, Japan), TRONOX CR880 (Tronox, Switzerland), and Lomon R-996 (Lomon Billions, China).

In another preferred embodiment of the present invention, the titanium dioxide is present in the coating powder composition in an amount ranging from 1 to 40 wt.-%, preferably 5 to 30 wt.-%, with respect to the total weight of the coating powder composition. An amount in said range is high enough to allow for a suitable distribution of titanium dioxide in the bottom layer of the powder coating and to yield a uniform white color. Further, an amount in said range is low enough to avoid any negative impact on the crosslinking reaction, the layer formation and/or physical properties of the resulting powder coating (e.g. an inferior strength or flexibility).

**[Further compounds]** The contents of the hydroxyl-functional polyester resin (A), the acrylic resin (B), the crosslinkers (C1) and (C2) and the color pigments can be chosen such that their amount is 100 wt.-%, with regard to the total weight of the inventive coating powder composition. However, preferably, said compounds make up to less than 100 wt.-% and the inventive coating powder composition additionally comprises further compounds, either in any of component 1 and 2, or separately. These further compounds can for example be a stabilizer, an antioxidant, a UV absorber, a catalyst, a process aid (such as degassing agents, flow agent and fluidizing aids), a filler, a wax, a matting agent, a flame retardant, an impact modifier, an elastomer, a thermoplastic, and other additives known by the skilled person, or a mixture thereof. They can provide the inventive coating powder composition with advantageous properties, such as improved flame resistance, improved mechanical properties, improved weatherability, improved flexibility, improved flow, improved compatibility and/or improved processability. Preferably, the further compounds make up to at least 5 wt.-%, more preferably at least 10 wt.-%, most preferably at least 20 wt.-% of the total weight of the coating powder composition. Further preferably, the further compounds make up to at most 40 wt.-%, more preferably at most 30 wt.-%, most preferably at most 25 wt.-% of the total weight of the coating powder composition. This ensures the desired, advantageous properties to be achieved whilst avoiding any negative impact on the crosslinking reactions and/or layer formation of the powder coating.

The coating powder composition according to the present invention can comprise a further compound that improves the resistance to aging and degradation, and that provides enhanced weatherability and durability. For example, a UV absorber, an antioxidant, an antiozonant, a hindered amine light stabilizer (HALS), a heat stabilizer or a mixture thereof can be employed as stabilizers. Preferably a mixture of a HALS and a UV absorber, preferably a triazine-based UV absorber, is used, as these compounds show a good processing performance and excellent compatibility with the other compounds of the inventive coating powder composition. As HALS, Tinuvin 144 (BASF, Germany) can be used whilst as UV absorber, 2-hydroxyphenyl-s-triazine (e.g. Tinuvin 405 by BASF, Germany) can be employed. The inventive coating powder composition preferably comprises a stabilizer or a mixture of two or more stabilizers in a total amount of from 0.5 to 5 wt.-%, more preferably from 0.5 to 2.5 wt.-%, particularly preferably from 0.5 to 1.5 wt.-%, with respect to the total weight of the coating powder composition. Suitable, commercially available stabilizers that may be employed alone or in combination are Tinuvin 326, Tinuvin 292, Tinuvin 328, Tinuvin P, Tinuvin 622, Tinuvin 405, Tinuvin 292, Tinuvin 152, Tinuvin 622, Tinuvin 770, Tinuvin 123, Tinuvin 144, Tinuvin 477 and Tinuvin 479 (all BASF, Germany).

The coating powder composition according to the present invention can comprise a further compound that improves the processing behavior. Exemplary process aids suitable for use in the inventive coating powder composition are a degassing agent, a flow agent, a fluidizing agent, an anti-caking agent, a lubricant, an anti-cratering and levelling additive, or a mixture thereof. As degassing agent, Benzoin (e.g.: Harke Chemicals, Germany) is preferably used, as it is effective in preventing the formation of air bubbles in the coating powder composition during the crosslinking reaction and improves the homogeneity of the resulting powder coating. As flow agent, BYK-3900 P (BYK, Germany) is preferably employed, as it improves the processing performance of the inventive coating powder composition. A process aid or a mixture of two or more process aids is/are preferably comprised in the inventive coating powder composition in a total amount of from 1.0 to 7.0 wt.-%, more preferably from 1.0 to 5.0 wt.-% and particularly preferably from 1.5 wt.-% to 3.0 wt.-%, with respect to the total weight of the coating powder composition. Suitable, commercially available process aids that may be employed alone or in combination are Benzoin (Harke Chemicals, Germany), Powdermate 486 CFL, Powdermate 507 PFL, Powdermate 542 DG and Powdermate 579 FL (all Troy Chemical Company, The Netherlands), Resiflow P 67, Resiflow PL 200, Resiflow PL 220 and Resiflow CP 77 (all Worlée-Chemie GmbH, Germany), BYK-364 P, BYK-3931, BYK-3932, BYK-3933, BYK-3900 P, Cerafluor 920, Cerafluor 929, Cerafluor 961 and Cerafluor 965 (all BYK, Germany), Ceretan ME 0825, Ceretan MF 5108 and Ceretan MTZ 9335 (all Münzing Chemie, Germany), and Ceridust 3910, Ceridust 6050M, Ceridust 9610 F and Licowax C Micropowder PM (all Clariant, Switzerland).

The coating powder composition according to the present invention can comprise a further compound that improves certain physical properties of the powder coating, such as a filler, particularly an active filler. A filler can be of organic or inorganic nature, with an inorganic filler being preferably an inorganic salt. Also, polymeric fillers, such as polymeric particles, may be employed. Preferably, a flame-retardant filler is employed in the inventive coating powder composition, particularly preferably barium sulfate or aluminum hydroxide (ATH), for example Portafill A 40 (Sibelco Europe, The Netherlands). ATH acts as flame retardant and smoke suppressant, and considerably improves the fire resistance and thermal insulation of the inventive powder coating prepared according to the present invention, without negatively affecting the mechanical properties of the powder coating, particularly its strength. Further, a reactive filler can be present in the inventive coating powder composition, which comprises functional groups that are able to react with one or more other compound(s) present in the composition during crosslinking at the processing temperature. This allows the reactive filler to be incorporated into the polymeric network of the produced powder coating by means of covalent bonds, which can improve the mechanical properties of the powder coating. The coating powder composition according to the present invention preferably comprises one or more fillers in a total amount of up to 35 wt.-%, more preferably up to 25 wt.-% and particularly preferably from 5 to 20 wt.-%, with respect to the total weight of the coating powder composition. Suitable, commercially available fillers that can be employed alone or in combination are Martinal OL 104, Martinal ON 310, Martinal ON 4608 (all Martinswerk GmbH, Germany), Portaryte 40/9, Portaryte B10, Portaryte B15 (all Sibelco Specialty Minerals, The Netherlands), Sachtofine LG (DEUTSCHE BARYT INDUSTRIE, Germany) and Blanc fixe M 0.9 (Harke Chemicals, Germany).

**[Further aspects]** In the present invention, the thermosetting coating powder composition is provided as multi-component composition. The hydroxyl-functional polyester resin (A) and crosslinker (C1) are comprised in component 1, whilst the hydroxyl-functional acrylic resin (B) and crosslinker (C2) are comprised in component 2. Components 1 and 2 are each present in a multitude of discrete particles. This allows to reduce or even avoid diffusion of the different polymer types upon crosslinking, and thus facilitates the formation of separate, distinct layers. Further, the crosslinking rate can be increased when the respective polymer and the associated crosslinker are already provided in the same component, thus in close proximity to each other. Thus, the hydroxyl-functional polyester resin (A) can be readily crosslinked with crosslinker (C1), and the hydroxyl-functional acrylic resin (B) can be readily crosslinked with crosslinker (C2) upon heating to a specific crosslinking temperature.

In a preferred embodiment of the present invention, the weight ratio of component 1 to component 2 in the coating powder composition is from 4:1 to 1:4, preferably from 4:1 to 1:2, yet preferably from 4:1 to 1:1, even more preferably from 3:1 to 1:1, particularly preferably from 2.5:1 to 1.5:1. This yields a good balance between stiffness and flexibility of the powder coating. It is particularly preferred to choose component 1 with a higher weight ratio than component 2, as this leads to the bottom layer of the resulting powder coating being thicker than the top layer, which allows to achieve an excellent optical appearance. At the same time, the top layer is still thick enough to allow for a defect-free, uniform coating of the underlying bottom layer and to provide a good weatherability and durability.

It is noted that the thermosetting coating powder composition according to the present invention is also capable of undergoing self-stratification when provided as one-component composition. In this case, the hydroxyl-functional polyester resin (A), the hydroxyl-functional acrylic resin (B), the crosslinkers (C1) and (C2) and the color pigments, preferably titanium dioxide, are mixed and provided as thermosetting coating powder composition, with which a self-stratified powder coating can then be obtained, provided that the weight ratio of the components in the composition and/or the processing parameters (e.g. time and temperature of crosslinking) are tailored accordingly. It is further noted that in case of a one-component composition, the addition of a single isocyanate crosslinker (C) can be sufficient. (C) can be crosslinker according to any of the embodiments disclosed with regards to (C1) or (C2) herein.

In the inventive coating powder composition, the Tg of both the hydroxyl-functional polyester resin (A) and the hydroxyl-functional acrylic resin (B) is preferably 90 °C or below, more preferably 80 °C or below. This allows for a high mobility of the polymer chains during thermal crosslinking, as all polymers are present in their entropy-elastic state at the processing temperature. To increase the shelf life of the inventive coating powder composition, it is preferred that (A) and (B) are in their energy-elastic state and thus have a limited chain mobility at ambient conditions (about 25 °C). Thus, preferably, the Tg of both (A) and (B) in the inventive coating powder composition ranges from 30 °C to 90 °C, more preferably from 40 °C to 80 °C.

Further, the coating powder composition according to the present invention has a good shelf life (i.e., storage stability). Preferably, the shelf life is at least 6 months, particularly preferably at least 12 months, at ambient conditions (about 25 °C). This allows the production, storage and transport of the inventive coating powder composition without any significant pre-reaction to occur.

The present invention also relates to a process for producing a multi-component thermosetting coating powder composition, preferably a self-stratifying composition as described above. Such a process employs a melt-mixing apparatus, preferably an extruder, in order to obtain a melt-mixed mixture of the raw materials being fed to the apparatus. The inventive process comprises the steps of (i) feeding a hydroxyl-functional polyester resin (A) and a crosslinker (C1) and optionally further compounds to an extruder to obtain a melt-mixed mixture (M1), (ii) feeding a hydroxyl-functional acrylic resin (B) and a crosslinker (C2) and optionally further compounds to an extruder to obtain a melt-mixed mixture (M2), and (iii) mixing of (M1) and (M2) prior to or after grinding (M1) and (M2) to obtain a multi-component thermosetting coating powder composition, preferably a self-stratifying composition as described above. An extruder has the advantage of continuous operation rather than batch-wise mixing. However, instead of using an extruder as melt mixing apparatus, also another known apparatus, such as a heated and stirred vessel comprising suitable mixing and heating means as known in the art may be employed. Thus, the process may comprise the steps of (i) feeding a hydroxyl-functional polyester resin (A) and a crosslinker (C1) and optionally further compounds to a melt-mixing apparatus to obtain a melt-mixed mixture (M1), (ii) feeding a hydroxyl-functional acrylic resin (B) and a crosslinker (C2) and optionally further compounds to a melt-mixing apparatus to obtain a melt-mixed mixture (M2), and (iii) mixing of (M1) and (M2) prior to or after grinding (M1) and (M2) to obtain a multi-component thermosetting coating powder composition, preferably a self-stratifying composition as described above.

Any of the processes to produce a multi-component thermosetting coating powder composition described within the present applications may be employed to produce a self-stratifying multi-component thermosetting coating powder composition as described herein. This can be achieved by choosing crosslinker (C1) of step (i) and crosslinker (C2) of step (ii) such that both (C1) and (C2) comprise (preferably consist of) isocyanates. Also, step (i) and/or (ii) may further comprise feeding of a color pigment to the melt-mixing device, preferably being an extruder, as the inventive self-stratifying coating powder composition necessarily comprises a color pigment. Particularly preferably, step (i) comprises feeding of a color pigment to the melt-mixing apparatus, preferably being an extruder, while preferably no color pigments are fed to the melt-mixing apparatus, preferably being an extruder, in the course of step (ii).

Preferably, the respective compounds are pre-mixed by means of a mixing device and subsequently fed to the melt-mixing apparatus, preferably being an extruder, which renders a particularly homogeneous distribution of the compounds in the respective mixtures (M1) and (M2). To avoid a significant amount of pre-reaction during production of the inventive coating powder composition, care has to be taken to perform the processing steps below the activation temperature of the crosslinker (e.g. below its deblocking temperature).

In the inventive process, melt-mixing and grinding is applied to obtain a coating powder because it can be performed with a high precision and at a low cost, as for example compared with a spray-drying process. The obtained particles can additionally be sieved to tailor the particle size distribution, in particular to remove too big (e.g.: particles greater than 150 µm) and/or too small particles (e.g.: particles smaller than 5 µm). Preferably, (M1) and (M2) are ground to particles with a d₅₀ median particle size ranging from 15 to 60 µm, more preferably 25 to 50 µm and most preferably 30 to 45 µm. This provides a good processability and yields a uniform powder coating with smooth, non-corrugated surface and interlayer interface, and a uniform optical appearance. Preferably, the particles are sieved (i.e., top-cut) using a sieve with a mesh size of at most 150 µm, preferably of at most 120 µm and most preferably of at most 100 µm. The presence of particles with a particle size greater than the given preferred mesh size is hereby avoided, as such large particles may negatively impact the processing of the coating powder composition and/or the surface appearance of the obtained powder coating.

In another embodiment of the present invention, the mixing of (M1) and (M2) is performed after grinding (M1) and (M2). Separate grinding of (M1) and (M2) allows to produce particles comprising component 1 and particles comprising component 2 with different sizes and/or different size distributions. Preferably, a ratio of the d₅₀ median particle size from component 2 to component 1 in the range from 0.1 to 9, more preferably in the range from 0.25 to 4, is used in the inventive coating powder composition, with both d₅₀ median particle sizes preferably being in the range from 15 to 60 µm. This was found to yield a powder coating with a particularly uniform layer formation and an excellent homogeneity.

In the present invention, particles of (M1) and (M2) can be mixed in dry state (referred to as "dry blending") by using a mixing device. Additionally, it is possible to create interparticle bonds during mixing (referred to as "bonding") by using a bonding-mixer. In a bonding process, a mixture of particles of (M1) and (M2) are mixed and simultaneously heated close to or even slightly above the glass transition temperature of (M1) and/or (M2). By doing so, particles may be glued together to a certain extent (in particular small particles onto larger particles) and/or the sphericity of the particles may be increased. Also, a narrower particle size distribution may thus be obtained.

The present invention further relates to a self-stratified powder coating obtained by using the self-stratifying multi-component thermosetting coating powder composition according to the present invention. The inventive coating powder composition can be coated onto various substrates, for example onto polymer, metal (in particular steel or aluminum), concrete, ceramic, wood, including engineered wood (such as fiber board, e.g. MDF), or a composite thereof, provided that the temperature stability of the substrate is good enough to be not damaged (e.g. degraded) at the processing temperature of the inventive coating powder composition. The substrate can be pre-treated and/or can comprise a primer coating, e.g. to increase its adhesion to the inventive powder coating. For architectural applications, preferably, a metal substrate is pre-treated in accordance with the requirements and quality standards for architectural applications as regularly provided for and updated by GSB International e.V. Further, an additional top-coating can be applied on top of the inventive powder coating to provide additional protection or any other desired function.

Another aspect of the present invention is a substrate being at least partially coated with a powder coating according to the present invention. To produce the coated substrate, the inventive coating powder composition can be applied, e.g. electrostatically, onto the surface of the substrate (e.g. by means of corona or tribo-electric charging). A layer of coating powder can thus be formed, which preferably results (after crosslinking) in a powder coating with a thickness of 50 to 120 µm, more preferably 55 to 100 µm, particularly preferably 60 to 90 µm. This was found to yield the best optical and mechanical properties of the resulting powder coating. The formed layer of coating powder can be crosslinked in an oven, such as a convection oven or an infrared oven, to obtain the inventive powder coating. Preferably, thermal crosslinking is performed at a substrate temperature in the range from 140 to 240 °C, more preferably from 150 to 220 °C, particularly preferably from 160 to 210 °C, for a time period of preferably 5 to 30 min, more preferably 10 to 25 min. This yields a powder coating with a good layer separation and good interlayer interactions, a good mechanical performance and a uniform thickness without any corrugation.

The present invention also relates to the use of the inventive self-stratifying multi-component thermosetting coating powder composition in a coating process. For example, the inventive coating powder composition can be used for the coating of outdoor structures, such as façade elements, window and door frames, and bridges. The inventive powder coating exhibits excellent physical properties, such as a good durability and weatherability (in particular an excellent resistance to aging and embrittlement), a good mechanical performance (in particular a good balance between strength, stiffness, flexibility and impact resistance), and an excellent optical appearance, including superior color and gloss retention over time. Thus, the inventive powder coating is particularly suitable for outdoor structures which need to withstand a harsh environment, with an outside temperature that can range from -30 to 80 °C (depending on location and season), without significant deterioration of the functional and decorative properties over time.

All embodiments and features of the present invention are interrelated, and each embodiment and/or disclosed feature can be combined with each other and also as any combination of two or more separately disclosed embodiments/features.

### Definitions

The following definitions apply within the scope of the present application.

**[Acrylic resin]** This term comprises oligomers and polymers derived from acrylic acid, methacrylic acid and/or acrylate monomers (e.g. butyl acrylate, methyl methacrylate). The acrylic resin may also be a copolymer comprising both incorporated acrylate monomers and non-acrylate monomers, such as styrene, e.g. a styrene-acrylate copolymer. In the present application, the acrylic resin can be an oligomer, a polymer or a combination thereof. If not explicitly stated otherwise, the term "acrylic resin" in its singular can comprise one or more acrylic resin(s).

**[Crosslinking]** This term (also referred to as "curing" or "hardening") is to be understood as the treatment of a thermosetting coating powder composition with energy (e.g. thermal energy or radiation), thereby producing a powder coating with the reactive, crosslinkable compounds (e.g. polymers bearing functional, crosslinkable groups) being in at least partially crosslinked state, so that a polymeric network is obtained.

**[Crosslinker]** The term crosslinker (also referred to as "crosslinking agent", "curing agent", "curative" or "hardener") is to be understood as a compound of a coating powder composition that is capable of reacting in any form with one or more other reactive, crosslinkable compounds of the coating powder composition (e.g. with a monomer, oligomer or polymer bearing functional, crosslinkable groups, typically a resin) to form a three-dimensional network, particularly a thermoset, by at least partially reacting said reactive compounds. In addition to a crosslinker, a catalyst, an accelerator and/or an initiator can be present to assist in the crosslinking reaction.

**[Coating powder composition]** This term is to be understood as a coating composition in particulate form that is suitable for coating onto a substrate to form a powder coating.

**[Color pigments]** Color pigments are to be understood as a chemical substance in particulate form that appears in a certain color because it selectively absorbs wavelengths of light. In the present application, the term "color pigments" comprises, apart from pigments with colors such as blue, red and yellow, also black pigments (e.g. carbon black) and white pigments (e.g. titanium dioxide), as well as effect pigments, such as metallic effect pigments and pearlescent pigments.

**[Component]** A component can comprise one or several compounds. Each of the components of the inventive coating powder compositions comprises at least two compounds (for example, component 1 comprises a hydroxyl-functional polyester resin and a crosslinker). In a coating powder composition, each component is provided as a plurality of particles.

**[Compound]** This term refers to a certain chemical substance present in a coating powder composition, for example a specific polymer (e.g. a hydroxyl-functional polyester resin) or a specific crosslinker (e.g. an isocyanate).

**[Durability]** This term describes the robustness of a certain material (such as a powder coating), particularly its ability to withstand environmental influences (such as mechanical loading, chemicals, UV radiation) and its resistance to physical and chemical aging.

**[dₓ particle size]** The dₓ particle size, also known as the dₓ value of a particle size distribution (PSD), is to be understood as the particle size at X% of a cumulative distribution (e.g. d₅₀ referring to the particle size at 50% of said cumulative distribution). For example, a d₅₀ value of 60 µm means that 50% of the particles are larger than 60 µm and 50% of the particles are smaller than 60 µm. The values d₁₀ and d₉₀ refer to the 10% and the 90% quantiles of the cumulative distribution, respectively. The dₓ particle size is determined by laser diffraction using a Malvern Mastersizer Scirocco 2000 manufactured by Malvern Panalytical GmbH (Germany). The laser diffraction is a volume-based measurement method, which means that the particle size distribution (PSD) is a volume distribution and the % are to be understood as vol.-%. The dₓ particle size is determined according to ISO 8130-13:2019.

**[Functionality]** The functionality of a compound, e.g. a polyester resin or crosslinker, is understood as the average number of a respective functional group (e.g. a hydroxyl group in case of hydroxyl functional polyester resins or an isocyanate group in case of isocyanate crosslinkers) per molecule of the respective compound.

**[Glass transition temperature (Tg)]** The glass transition is the gradual transition of an amorphous or semi-crystalline polymer from its energy-elastic (i.e., glassy) state into its entropy-elastic (i.e., rubbery) state. In the present application, the point of inflection of the endothermic step indicating the glass transition is referred to as the glass transition temperature (Tg).

**[Homogeneity]** The term homogeneity (also "homogeneous") intends to refer to the compounds in a coating powder composition being present in well-dispersed state with a random distribution. Likewise, said term signifies that the compounds in a powder coating are in well-dispersed state with a random distribution.

**[Hydroxyl value (HV)]** The term hydroxyl value or hydroxyl number (HV) is defined as the number of milligrams (mg) of potassium hydroxide (KOH) required to neutralize the acetic acid taken up on acetylation of one gram of a chemical substance that contains free hydroxyl groups. The hydroxyl value (HV) is a measure of the content of free hydroxyl groups (OH groups) in a chemical substance, usually expressed in units of the mass of potassium hydroxide (KOH) in milligrams equivalent to the hydroxyl content of one gram of the chemical substance. The analytical method used to determine the hydroxyl value (HV) preferably involves acetylation of the free hydroxyl groups of the chemical substance in organic solvent. After completion of the reaction, water is added, and the remaining unreacted acetylation reagent, which is preferably acetic anhydride, is hydrolyzed and measured by titration with potassium hydroxide (KOH). The hydroxyl value (HV) of polyester resins is determined according to DIN EN ISO 4629:1998-07. The hydroxyl value (HV) of the acrylic resins (B) was obtained from the datasheets of the supplier (ESTRON Chemical, USA), however, these values may be measured in analogy to the polyester resin according to DIN EN ISO 4629:1998-07. If a mixture of two or more polyesters is used in component 1, and/or a mixture of two or more acrylic resins is used in component 2 of the inventive coating powder composition, the given hydroxyl value (HV) refers to the average hydroxyl value (HV) of the mixture of polyesters or the mixture of acrylic resins.

**[Isocyanate]** In the present application, the term isocyanate comprises both unblocked and blocked isocyanates, as well as dimers thereof (so-called uretdiones), if not explicitly stated otherwise.

**[Melting enthalpy]** The melting enthalpy (also referred to as the enthalpy of fusion) of a compound or a composition is the change in enthalpy resulting from providing energy (typically heat) to a specific quantity of the compound or composition so that it changes its state from a solid to a liquid at constant pressure.

**[Melting temperature]** The melting temperature (Tm) of a chemical substance is the temperature at which it changes its state from solid to liquid. As polymers have a melting range rather than a melting point, the melting temperature of a semi-crystalline polymer is signified to be the peak temperature of the endothermic melting peak of the crystalline domains of said polymer, which is determined from DSC analysis (according to the method given in the present application).

**[Polyester resin]** This term is to be understood as an oligomer or polymer comprising at least two ester functionalities in its polymeric backbone. It can for example be synthesized via a polycondensation reaction of a di-, tri- or polyfunctional carboxylated monomer, and a di-, tri- or polyfunctional hydroxyl-functionalized monomer. The terms polyester, polyester resin and polyester polymer can be used synonymously. If not explicitly stated otherwise, the term "polyester resin" in its singular can comprise one or more polyester resin(s).

**[Polymer, amorphous]** An amorphous polymer is to be understood as a polymer consisting essentially of amorphous, non-crystallizable domains in its solid state. A polymer is considered to be amorphous if it does not show a discernible crystallization or melting peak after elimination of its thermal history, which can for example be determined by means of DSC analysis.

**[Polymer, semi-crystalline]** A semi-crystalline polymer is to be understood as a polymer comprising both amorphous and crystalline domains in its solid state. A polymer is considered to be semi-crystalline if it shows at least one crystallization peak or melting peak after elimination of the thermal history, which can for example be determined by means of DSC analysis.

**[Particles of a coating powder]** In the present application, the term "particles" in the context of coating powders refers to ground particles, in particular with a particle size in the range of 5 to 200 µm. The inventive coating powder composition comprises a plurality of particles.

**[Powder coating]** This term is to be understood as an at least partially crosslinked coating powder, typically in the form of a coating layer deposited onto a substrate.

**[Self-stratifying]** The term "self-stratifying" (also referred to as "self-stratification" or "self-layering") in the context of coating compositions is to be understood as the capability of a coating composition comprising at least two polymers with different chemical structures which, when applied onto a substrate and treated (e.g. crosslinked) to produce a powder coating, undergo self-ordering, hereby causing a nonhomogeneous coating, yet even the formation of different phases in the obtained coating. For example, separate, distinct layers can be formed, a concentration gradient can be developed such that the polymers are each enriched in different depths of the obtained coating, or an island structure can emerge.

**[Transparent]** Transparency is the physical property of allowing light to pass through a material without appreciable scattering of light. A transparent layer of a powder coating according to the present invention intends to refer to a layer that has sufficient transparency to recognize the coating layer(s) and/or substrate(s) underneath, preferably at a thickness of said transparent layer of 50 µm or above. Accordingly, the transparent layer can be colorless or slightly pigmented (e.g. comprise less than 1 wt.-% of color pigments).

**[Weight average molecular weight (Mw)]** The weight average molecular weight (Mw) is a statistic number relating to the molecular weight distribution of a chemical substance, particularly a polymer. The Mw of polymers is determined by means of gel permeation chromatography (SECurity2 GPC System, supplied by PSS-Polymer, Germany) against polystyrene standards. For amorphous polymers, tetrahydrofurane (THF) is employed as eluent, whilst for semi-crystalline polymers, chloroform is employed as eluent.

### Measurement methods

### Method 1 - Viscosity

### Method 1a - Determination of the viscosity of acrylic resins

The viscosity of the acrylic resin is determined by using a parallel plate rheometer AR2000ex by TA Instruments (US). For the sample preparation, 1.1g of the resin is pressed into a tablet (diameter = 25 mm, height = approximately 1.8 mm) at a pressure of 10 bar by using a manual hydraulic press (Mauthe Maschinenbau, Germany). The tablet is clamped between the two plates of the parallel plate rheometer, the chamber of the rheometer is closed, and the measurement is started with the following heating program:
- 20 to 40 °C at a heating rate of 5 K/min,
- 40 to 60 °C at a heating rate of 10 K/min,
- 60 to 200 °C at a heating rate of 5 K/min.

The sample is kept at 200 °C for the rest of the measurement (typically 35 to 40 min in total). A frequency of 1 Hz and an amplitude of 0.05% are applied. The storage modulus (G'), the loss modulus (G"), the complex shear modulus (G^{∗}) and the complex shear viscosity (η^{∗}) are determined. The absolute value of the complex shear viscosity (|η^{∗}|) at a certain temperature is denoted as the viscosity of the resin in Pas and is provided by the analysis software of the rheometer. Supplementary, the standard ISO 6721-10:2015 is employed.

### Method 1b - Determination of the viscosity of polyester resins

The dynamic melt viscosity (η) of the polyester resins is determined by using a cone-plate viscometer device (Brookfield CAP 2000+ by Brookfield Ametek, US) equipped with spindle 06 (CAP-S-06); depending on the expected dynamic viscosity of the sample, also other spindles might be appropriate (e.g. spindle 02 for dynamic viscosities of below 0.5 Pas at 130 °C).

For amorphous polyester resins, the plate is pre-heated to 200 °C and an appropriate amount of sample (typically about 0.1g for solid compounds and spindle 06) is applied onto the plate. The sample is heated to 200 °C and the measurement is started by applying a rotational speed of 700 rounds per minute (rpm) for a time period of 115 sec. The dynamic melt viscosity at a temperature of 200 °C is then obtained from the display of the device.

For (semi-)crystalline polyester resins, the plate is pre-heated to 130 °C and an appropriate amount of sample (typically about 0.1 g for solid compounds and spindle 06 or spindle 02) is applied onto the plate. The sample is heated to 130 °C and the measurement is started by applying a rotational speed of 700 rounds per minute (rpm) for a time period of 115 sec. The dynamic melt viscosity at a temperature of 130 °C is then obtained from the display of the device.

Supplementary information (for example regarding appropriate choice of spindle, guideline for the appropriate amount of sample) can be found in the user manual of the device (Manual No. M02-313-1091699, as available from: *https.-*/*lwww.brookfieldengineering.com*/-/*media*/*ametekbrookfield*/*manuals*/*lab%20viscometers*/*cap2000%20instructions.pdf?la=en*) [retrieved on 28 March 2022].

### Method 2 - SEM images

Scanning electron microscopy (SEM) images are taken by using a scanning electron microscope (JSM-IT100, JEOL, Japan) equipped with a backscatter electron detector (MP-04040BED, JEOL, Japan) and an analysis software InTouchScope (Version 1.060, JEOL, Japan) with the following measurement parameters: Acceleration = 10 kV, width = 10 mm, vacuum = 10 Pa, magnification = 200.

For the sample preparation, a powder-coated aluminum substrate is cut into 10x10 mm pieces. The layer thickness of the powder coating is typically between 60 and 80 µm. The sample piece is degreased with isopropanol and then embedded in a cold embedding medium (Epofix Kit (for samples A-1 to A-6), or LevoCit Kit (for samples Ref-1 and Ref-2), Struers Germany; diameter of embedding mould of 40 mm) so that the cross-section of the sample piece is visible from above. The embedded cross-section is then ground and polished with a polishing machine (Labopol-5, Struers, Germany) with the following program:
1. Rough surface grinding with SiC foil on MD Gekko disk, SiC foil #220, Struers followed by SiC foil #320, Struers and SiC foil #500, Struers (pressure while grinding is applied to the sample by hand, 300 rpm for 2 min)
2. First pre-polishing with 9 µm suspension (DiaPro Allegro/Largo 9 µm, Struers) on MD Largo honeycomb disk (spring pressure 30 N, 150 rpm for 5 min)
3. Second pre-polishing with 3 µm suspension (DiaPro Dac 3 µm, Struers) on a polishing cloth on DAC 3 µm disk (spring pressure 20 N, 150 rpm for 4 min)
4. Polishing with 0.04 µm suspension (OP-U NonDry 0,04 µm, Struers) on a polishing cloth on MDChem disk (spring pressure 15 N, 150 rpm for 1 min)

It is noted, however, that also alternative electron microscopy measurement methods and sample preparation procedures may be employed as known by the skilled person, which provide sufficient image quality to observe the layer separation of the polyester and acrylic phase.

### Method 3 - DSC analysis

The DSC measurements of the thermosetting coating powders, powder coatings, or individual compounds are performed by means of a DSC device (NETZSCH (Germany), DSC 204 F1 Phoenix) using a heating/cooling rate of 20 K/min (10-15 mg sample weight). The temperature program given in Table 1 is applied; samples are measured under nitrogen atmosphere. The Tg is determined by evaluating the point of inflection of the endothermal step (only endothermal steps above 0 °C are considered except for semi-crystalline polyesters, which may have a Tg well below 0 °C). The Tg of the coating powder (or an individual compound) prior to crosslinking is determined from heating cycle 2, step #5 of the measurement program. The Tg of the crosslinked coating powder (which corresponds to the Tg of the powder coating obtained from the inventive powder) is determined from heating cycle 3, step #9 (note that the coating powder is crosslinked in the course of heating cycle 2, steps #5 and #6). The melting enthalpy is determined from the endothermic area of the heating cycle 2, step #5. The melting point is determined as the local extremum (i.e., the peak) of said endothermic area from heating cycle 2, step #5.

**Table 1 - Temperature program for DSC measurements**

| **Step number** | **Cycle** | **Mode** | **Temperature (°C)** | **Heating/cooling rate (K/min)** | **Time (hh:mm)** |
|---|---|---|---|---|---|
| 0 | Heating cycle 1 | Start | 25 | | |
| 1 | | Dynamic | 80 | 20 | 00:03 |
| 2 | | Isotherm | 80 | | 00:01 |
| 3 | Cooling cycle 1 | Dynamic | -25 | 20 | 00:05 |
| 4 | | Isotherm | -25 | | 00:02 |
| 5 | Heating cycle 2 | Dynamic | 250 | 20 | 00:14 |
| 6 | | Isotherm | 250 | | 00:20 |
| 7 | Cooling cycle 2 | Dynamic | -25 | 20 | 00:14 |
| 8 | | Isotherm | -25 | | 00:02 |
| 9 | Heating cycle 3 | Dynamic | 250 | 20 | 00:14 |
| 10 | | Isotherm | 250 | | 00:20 |

### Brief description of the figures

In Figures 1-8, SEM images of powder coatings obtained from different thermosetting coating powders are shown. Figures 1 and 2 show coatings that were prepared by a conventional coating approach, whereas Figures 3-8 show self-stratified coatings.
**Figure 1****:** SEM image of powder coating Ref-1 obtained from a conventional two-layer coating process requiring two individual application and curing steps.
**Figure 2****:** SEM image of powder coating Ref-2 obtained from a conventional powder-in-powder coating process requiring two application steps.
**Figure 3****:** SEM image of self-stratified powder coating A-1.
**Figure** 4: SEM image of self-stratified powder coating A-2.
**Figure 5****:** SEM image of self-stratified powder coating A-3.
**Figure 6****:** SEM image of self-stratified powder coating A-4.
**Figure 7****:** SEM image of self-stratified powder coating A-5.
**Figure 8****:** SEM image of self-stratified powder coating A-6.

### Examples

It is noted that the machinery and set-up given below describes the production of the coating powders and corresponding powder coatings on laboratory scale but of course, production is possible on suitable production and application lines on industrial scale. Also, the described process steps, e.g. for the preparation, application and curing of a specific composition might have to be slightly adjusted for certain inventive formulations. Such adjustments, however, are within the common general knowledge of the skilled person. In principle, common techniques as known in the art of coating powders may be employed to produce, apply and cure the coating powders according to the present invention.

It is further noted that the following examples serve to better illustrate the present invention to the skilled person, but these examples shall in no way be regarded as limiting for the scope of the invention. The skilled person is capable, without any additional inventive skill, to apply and modify the provided technical teaching in order to arrive at alternative embodiments of the disclosed invention, in particular alternative formulations for inventive, self-stratifying coating powders.

### Example 1 - Formulations of the individual components and coating powders

The compounds used to prepare thermosetting coating powders according to the following formulations are listed and described briefly in Table 2. Table 3 shows individual formulations for component 1, each comprising a hydroxyl-functional polyester resin (A) and a crosslinker (C1). Table 4 shows individual formulations for component 2, each comprising a hydroxyl-functional acrylic resin (B) and a crosslinker (C2). Table 5 shows formulations for multi-component thermosetting coating powder compositions according to the present invention.

**Table 2 - Compounds used in the examples**

| **Tradename** | **Supplier** | **Short description** | **Selected properties / Function** |
|---|---|---|---|
| Uralac P 1580 | Covestro, Germany | Saturated, hydroxyl functional polyester resin (A) | Polyester resin |
| | | | Hydroxyl Value: 75-95 mg KOH/g, Tg: appr. 51 °C |
| | | | Viscosity (Method 1b) = 2,2 Pa^{∗}s |
| Crylcoat 4890-0 | Allnex, Germany | Saturated, hydroxyl functional polyester resin (A) | Polyester resin |
| | | | Hydroxyl Value: 25-35 mg KOH/g, Tg: appr. 58 °C |
| | | | Viscosity (Method 1b) = 5,5 Pa^{∗}s |
| Isocryl H-1871 | ESTRON Chemical, USA | Hydroxyl functional acrylic resin (B) | Acrylic resin |
| | | | Hydroxyl Value: 30 mg KOH/g, Softening point (Ring and Ball) = 110-130 °C |
| | | | Viscosity (Method 1a) = 4,7 Pa^{∗}s |
| Isocryl H-60 | ESTRON Chemical, USA | Hydroxyl functional acrylic resin (B) | Acrylic resin |
| | | | Hydroxyl Value: 60 mg KOH/g, softening point (Ring and Ball) = 112-122 °C |
| | | | Tg = 50 °C |
| | | | Viscosity (Method 1a) = 2,9 Pa^{∗}s |
| Isocryl H-65 | ESTRON Chemical, USA | Hydroxyl functional acrylic resin (B) | Acrylic resin |
| | | | Hydroxyl Value: 60-65 mg KOH/g, softening point (Ring and Ball) = 107-120°C |
| | | | Viscosity (Method 1a) = 15,9 Pa^{∗}s |
| Isocryl H-89 | ESTRON Chemical, USA | Hydroxyl functional acrylic resin (B) | Acrylic resin |
| | | | Hydroxyl Value: 89 mg KOH/g, Tg = 54 °C |
| | | | Viscosity (Method 1a) = 2,6 Pa^{∗}s |
| Vestagon | Evonik, Austria | Polyisocyanate adduct (C1 and/or C2) | Crosslinker |
| B-1400 | | | Tg=45-58 °C |
| Vestagon | Evonik, Austria | Polyisocyanate adduct (C1 and/or C2) | Crosslinker |
| B 1530 | | | Tg= 41-53 °C |
| TI-SELECT TS 6200 | DuPont, Germany | Titanium dioxide (TiO2) | Color pigment |
| Portafill A 40 | Sibelco, Belgium | Aluminum hydroxide (ATH) | Filler |
| BYK-368 P | BYK, Germany | Polyacrylate, absorbed on silica | Flow agent |

**Table 3 - Exemplary formulations for component 1; contents in wt. %**

| **Compound** | **Component 1(A)** | **Component 1(B)** | **Component 1(C)** |
|---|---|---|---|
| Crylcoat 4890-0 | 62.6 | | |
| URALAC P 1580 | | 51.5 | 49.7 |
| Vestagon B 1530 | | 21.5 | |
| Vestagon B-1400 | 10.4 | | 23.3 |
| TI-SELECT TS6200 | 15.0 | 15.0 | 15.0 |
| Portafill A 40 | 10.0 | 10.0 | 10.0 |
| BYK-368 P | 2.0 | 2.0 | 2.0 |
| TOTAL | 100.0 | 100.0 | 100.0 |

**Table 4 - Exemplary formulations for component 2; contents in wt. %**

| **Compound** | **Component 2(D)** | **Component 2(E)** | **Component 2(F)** | **Component 2(G)** | **Component 2(H)** |
|---|---|---|---|---|---|
| Isocryl H-1871 | 84.1 | | | | |
| Isocryl H-60 | | 75.7 | 73.6 | | |
| Isocryl H-65 | | | | 72.8 | |
| Isocryl H-89 | | | | | 65.7 |
| Vestagon B 1530 | | 22.3 | | | |
| Vestagon B-1400 | 13.9 | | 24.4 | 25.2 | 32.3 |
| BYK-368 P | 2.0 | 2.0 | 2.0 | 2.0 | 2.0 |
| TOTAL | 100.0 | 100.0 | 100.0 | 100.0 | 100.0 |

**Table 5 - Exemplary compositions of coating powders according to the present invention; contents in wt.%**

| **Component** | **Composition A-1** | **Composition A-2** | **Composition A-3** | **Composition A-4** | **Composition A-5** | **Composition A-6** |
|---|---|---|---|---|---|---|
| Component 1(A) | 66.7 | | | | | |
| Component 1(B) | | | 66.7 | | | |
| Component 1(C) | | 66.7 | | 66.7 | 66.7 | 66.7 |
| Component 2(D) | 33.3 | 33.7 | | | | |
| Component 2(E) | | | 33.3 | | | |
| Component 2(F) | | | | 33.3 | | |
| Component 2(G) | | | | | 33.3 | |
| Component 2(H) | | | | | | 33.3 |
| TOTAL | 100.0 | 100.0 | 100.0 | 100.0 | 100.0 | 100.0 |

### Example 2 - Exemplary preparation of an individual component of the inventive coating powder; e.g. component 1 or component 2 (e.g. 1(A) - 1(C) or 2(D) - 2(H))

All compounds, such as polymers (i.e.: polyester resin(s) (A) or acrylic resin(s) (B)), crosslinker(s) (e.g.: (C1) or (C2), and optionally color pigments, fillers, additives and further compounds of a respective component are weighed according to the formulations of Tables 3 or 4 (0.5 kg in total per component), put in a plastic bag and roughly premixed by hand in said plastic bag. The so-formed pre-mixture is further mixed in a high-speed mixer (Thermo PRISM Pilot 3, Thermo Fisher Scientific, US) for 10 s with a rotor speed of 1,000 rpm and then extruded by means of a double screw extruder (ZSK 18, Coperion GmbH, Germany) at a screw speed of 600 rpm with a temperature of at most 100 °C in order to avoid pre-reactions. Further, a cooling device for the feeding area is used in order to avoid overheating. The extrudate (M1 or M2, respectively) is then platted and cooled down to ambient temperature (about 25 °C) and granulated manually (e.g. by use of a plastic hammer). The so-obtained granulate may then be ground with an impact mill (ICM 2.4, Neumann & Esser, Germany) and optionally sieved, e.g.: top cut at 120 µm, thereafter to obtain a coating powder having a suitable particle size distribution (PSD) (e.g.: dio = 5-20 µm, d₅₀ = 20-50 µm, d₉₀ = 50-110 µm; such as d₁₀ = 10 µm, d₅₀ = 30 µm, d₉₀ = 70 µm).

### Example 3 - Exemplary preparation of a coating powder according to the present invention (e.g. A-1 - A-6)

Granulated extrudates of both component 1 (M1) and component 2 (M2) as obtained from Example 2 are mixed in the ratios according to Table 5. The mixed granulates are then ground with an impact mill (ICM 2.4, Neumann & Esser, Germany) and optionally sieved, e.g.: top cut at 120 µm, thereafter to obtain a coating powder having a suitable particle size distribution (PSD) (e.g.: d₁₀ = 5-20 µm, d₅₀ = 20-50 µm, d₉₀ = 50-110 µm; such as d₁₀ = 10 µm, d₅₀ = 30 µm, d₉₀ = 70 µm). Alternatively, the granulated extrudate of component 1 (M1) and the granulated extrudate of component 2 (M2) can first be ground separately from each other with an impact mill (ICM 2.4, Neumann & Esser, Germany) and optionally be sieved, e.g.: top cut at 120 µm thereafter to obtain individual components having a suitable particle size distribution (PSD) (e.g.: d₁₀ = 5-20 µm, d₅₀ = 20-50 µm, d₉₀ = 50-110 µm; such as d₁₀ = 10 µm, d₅₀ = 30 µm, d₉₀ = 70 µm). These powdered components are then mixed, e.g. by using a common dry-blending process, in the ratios given in Table 5 to obtain the coating powder compositions according to the present invention.

### Example 4 - Exemplary application and curing of coating powders according to the present invention (e.g. A-1 to A-6) to prepare inventive powder coatings

Compositions A-1 to A-6 are applied electrostatically (Corona charging) by using a spray gun (60 kV, 40 µA; GEMA OptiTronic, ITW GEMA Easy Select, Austria). The charged particles are applied onto an aluminum substrate (aluminum panel 147 x 75 x 0.7 mm, Wurm & Awender Kunststofftechnik GmbH, Austria). The formed coating powder layer is then cured at 200 °C (substrate temperature) for 15 min in a convection oven (Heraeus, Germany). The coating powder is applied such that the layer thickness of the powder coating is about 80 µm, as determined with the film thickness gauge byko-test 4500 Fe/NFe (BYK, Germany). Depending on the formulation of the composition and the desired application, the above-described procedure might have to be adjusted, and another application technique (e.g.: tribo charging) and/or curing method (e.g.: infrared oven) may be more suitable in order to obtain a powder coating from the thermosetting coating powder according to the present invention. These methods are well-known and the skilled person is capable of choosing suitable applications and curing conditions for a specific coating powder composition.

### Example 5 - Preparation of powder coating Ref-1 (conventional 2-layer coating process)

Granulates of component 1 (component 1(C) in Table 3) and component 2 (component 2(H) in Table 4) are separately ground to obtain separate polyester and acrylic coating powders (e.g.: d₁₀ = 5-20 µm, d₅₀ = 20-50 µm, d₉₀ = 50-110 µm; such as d₁₀ = 10 µm, d₅₀ = 30 µm, d₉₀ = 70 µm). In a first step, the polyester coating powder 1(C) is applied electrostatically (Corona charging) by using a spray gun (60 kV, 40 µA byGEMA OptiTronic, ITW GEMA Easy Select, Austria). The charged particles are applied onto an aluminum substrate (aluminum panel 147 x 75 x 0.7 mm, Wurm & Awender Kunststofftechnik GmbH, Austria). The formed coating powder layer is then cured at 200 °C (substrate temperature) for 5 min in a convection oven (Heraeus, Germany). The polyester coating powder is applied such that the layer thickness of the polyester powder coating is about 60 µm as determined with the film thickness gauge byko-test 4500 Fe/NFe (BYK, Germany). The coated substrate is then cooled to ambient temperature and the spraying equipment (e.g.: spray gun and spray booth) is cleaned carefully. Then, the acrylic coating powder 2(H) is applied electrostatically (Corona charging) by using a spray gun (60 kV, 40 µA by GEMA OptiTronic, ITW GEMA Easy Select, Austria) in a second application step. The charged particles are applied on top of the obtained polyester powder coating on the aluminum substrate. The formed coating powder layer is then cured at 200 °C (substrate temperature) for 15 min in a second curing step in a convection oven (Heraeus, Germany). The coating powder is applied such that the layer thickness of the overall powder coating is about 80 µm as determined with the film thickness gauge byko-test 4500 Fe/NFe (BYK, Germany). Again, the substrate needs to cool down to ambient temperature and the spraying equipment is cleaned. Two separate application and curing steps were used, which require cleaning of the spraying equipment in-between the application steps as well as cooling of the coated substrate after the first curing step.

### Example 6 - Preparation of powder coating Ref-2 (powder-in-powder coating process)

Granulates of both component 1 (component 1(C) in Table 3) and component 2 (component 2(H) in Table 4) are separately ground to obtain separate polyester and acrylic coating powders (e.g.: d₁₀ = 5-20 µm, d₅₀ = 20-50 µm, d₉₀ = 50-110 µm; such as d₁₀ = 10 µm, d₅₀ = 30 µm, d₉₀ = 70 µm). In a first step, the polyester coating powder 1(C) is applied electrostatically (Corona charging) by using a spray gun (60 kV, 40 µA; GEMA OptiTronic, ITW GEMA Easy Select, Austria). The charged particles are applied onto an aluminum substrate (aluminum panel 147 x 75 x 0.7 mm, Wurm & Awender Kunststofftechnik GmbH, Austria). The spraying equipment is being cleaned carefully. Then the acrylic coating powder 2(H) is applied electrostatically (Corona charging) by using a spray gun (60 kV, 40 µA; GEMA OptiTronic, ITW GEMA Easy Select, Austria) in a second step on top of the uncured polyester coating powder on the aluminum substrate. The thus formed coating powder layers are then simultaneously cured at 200 °C (substrate temperature) for 15 min in a convection oven (Heraeus, Germany). The coating powders are applied such that the layer thickness of the overall powder coating is about 80 µm (about 60 µm polyester powder coating + about 20 µm acrylic powder coating), as determined with the film thickness gauge byko-test 4500 Fe/NFe (BYK, Germany). Again, the spraying equipment is cleaned thoroughly. Two separate application steps were used, which require cleaning of the spraying equipment in-between the application steps.

### Example 7 - Microscopic view of powder coatings A1 - A6, Ref-1 and Ref-2

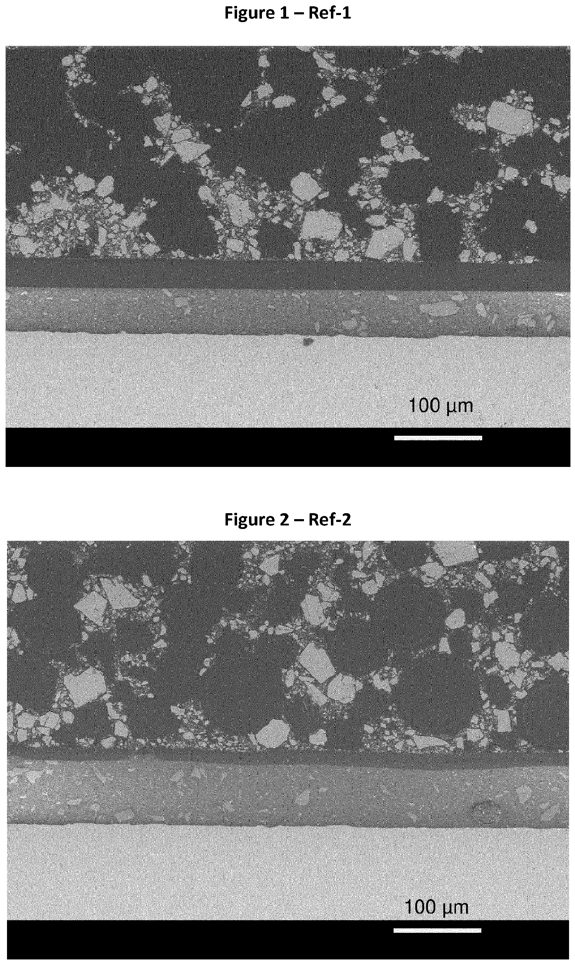

SEM images of cross-sections of obtained powder coatings are displayed in Figures 1 to 8. The individual layers of the powder coatings are visible in-between the aluminum substrate (shown in the lower part of the figures) and the embedding medium (shown in the upper part of the figures). As can be seen from Figure 1 and Figure 2, which display Ref-1 and Ref-2, respectively, distinct layers of the polyester and acrylic powder coatings are observed as expected for this conventional process which are known to yield distinct coating layers.

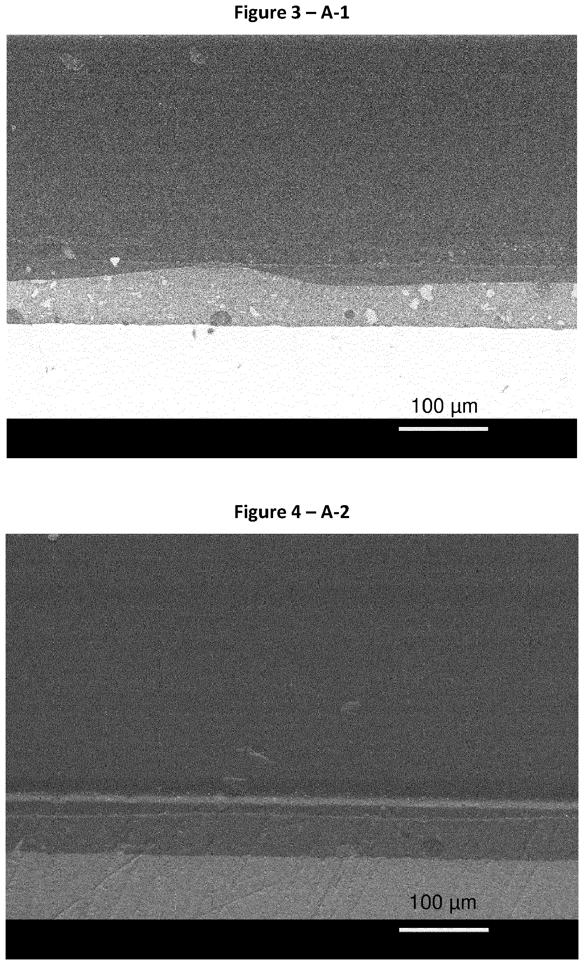

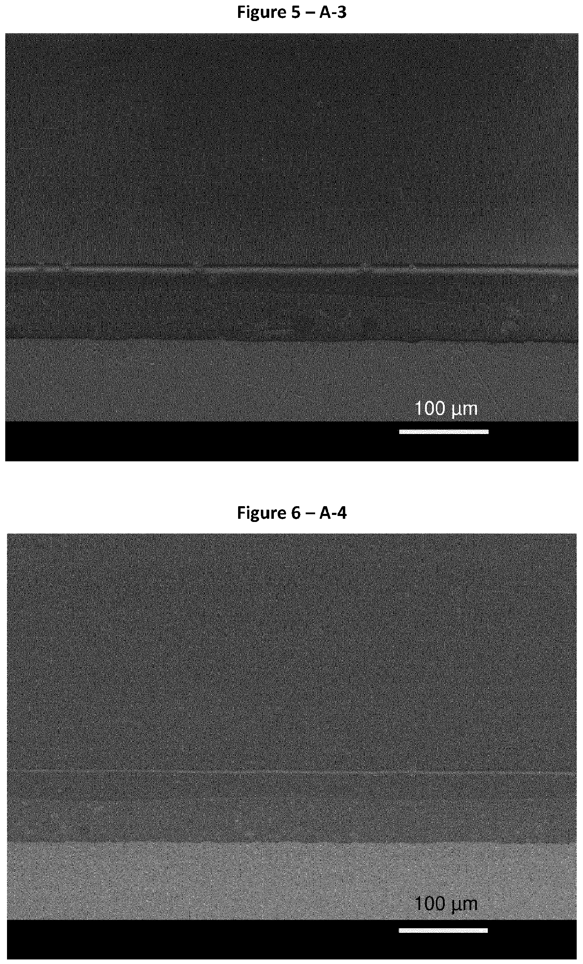

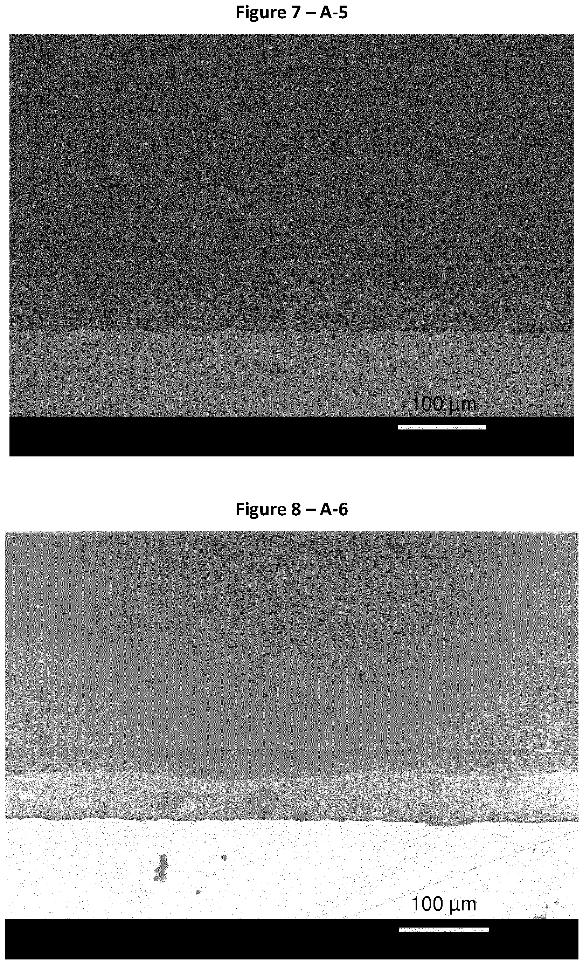

The powder coatings obtained from inventive coating powders surprisingly exhibit a separation of the polyester and acrylic layer, as is shown for inventive compositions A-1 (Figure 3), A-2 (Figure 4), A-3 (Figure 5), A-4 (Figure 6), A-5 (Figure 7) and A-4 (Figure 8). These coatings surprisingly show two distinct powder coating layers, the bottom layer being a polyester layer and the top layer being an acrylic layer. Further a smooth surface and a smooth interlayer interface can be seen, which allows to predict and achieve uniform physical, particularly optical, properties, as well as excellent outdoor durability and weathering resistance.

Figures 3 to 8 clearly indicate that by self-stratification of the inventive powders, a similarly good result can be achieved as compared to conventional two-layer coating powder applications, as shown in Ref-1 and Ref-2 (Figures 1 and 2).

## Claims

1. A self-stratifying multi-component thermosetting coating powder composition comprising
component 1, comprising a hydroxyl-functional polyester resin (A) and a crosslinker (C1), and
component 2, comprising a hydroxyl-functional acrylic resin (B) and a crosslinker (C2),
wherein components 1 and 2 are each present in a multitude of discrete particles, the crosslinkers (C1) and (C2) are selected from the group of isocyanates, and the composition further comprises color pigments.

2. The composition according to the previous claim, wherein the color pigments comprise titanium dioxide.

3. The composition according to claim 2, wherein the titanium dioxide is present in an amount ranging from 1 to 40 wt.-%, preferably 5 to 30 wt.-%, with respect to the total weight of the coating powder composition.

4. The composition according to any of the previous claims, wherein the color pigments are comprised in component 1.

5. The composition according to any of the previous claims, wherein crosslinkers (C1) and (C2) have the same chemical structure.

6. The composition according to any of the previous claims, wherein the isocyanate is a blocked isocyanate, preferably a caprolactam-blocked isocyanate.

7. The composition according to any of the previous claims, wherein the weight ratio of (B)/(A) is 1.0 or below.

8. The composition according to any of the previous claims, wherein the hydroxyl-functional polyester resin (A) is amorphous and has a viscosity in the range from 0.5 to 35 Pas at a temperature of 200 °C, as determined according to method 1b given in the present application.

9. The composition according to any of the previous claims, wherein the hydroxyl values of (A) and (B), or, if a mixture of polyesters (A) and/or a mixture of acrylic resins (B) is present, the average hydroxyl values of the mixture of polyesters (A) and/or the mixture of acrylic resins (B), have a difference of below 20 mg KOH/g, preferably of 15 mg KOH/g or below.

10. The composition according to any of the previous claims, wherein the weight ratio of component 1 to component 2 is from 4:1 to 1:1.

11. The composition according to any of the previous claims, wherein component 2 is free of any color pigments.

12. A process for producing a multi-component thermosetting coating powder composition, preferably according to any of claims 1 to 11, comprising the following steps:
(i) feeding a hydroxyl-functional polyester resin (A) and a crosslinker (C1) and optionally further compounds to an extruder to obtain a melt-mixed mixture (M1),
(ii) feeding a hydroxyl-functional acrylic resin (B) and a crosslinker (C2) and optionally further compounds to an extruder to obtain a melt-mixed mixture (M2), and
(iii) mixing of (M1) and (M2) prior to or after grinding (M1) and (M2) to obtain a multi-component thermosetting coating powder composition.

13. A process according to claim 12, wherein (M1) and (M2) are ground to particles with a d₅₀ median particle size ranging from 15 to 60 µm, as determined according to ISO 8130-13:2019.

14. A self-stratified powder coating obtained by using a composition according to any of claims 1 to 11.

15. A substrate being at least partially coated with a self-stratified powder coating according to claim 14.

16. Use of a composition according to any of claims 1 to 11 in a coating process.
